# EUROPEAN PATENT APPLICATION

(11) **EP 4 845 057 A1**
(43) Date of publication of application: **25.11.2026**
(21) Application number: 25751141.0
(22) Date of filing: 20.01.2025
(51) Int. Cl.: H04B 17/309

(54) **PATH LOSS DETERMINATION METHOD AND COMMUNICATION APPARATUS**

(30) Priority: 07.02.2024 CN 202410176393
(71) Applicant: Huawei Technologies Co., Ltd., Shenzhen, Guangdong 518129 (CN)
(72) Inventor: LI, Fang, Shenzhen, Guangdong 518129 (CN); FAN, Bo, Shenzhen, Guangdong 518129 (CN); YUAN, Shitong, Shenzhen, Guangdong 518129 (CN)
(74) Representative: Körber, Martin Hans
(86) International application number: PCT/CN2025/073194
(87) International publication number: WO 2025/167539

(57) **Abstract**

This application provides a method for determining a path loss and a communication apparatus. A terminal device may receive first downlink control information from a network device. The first downlink control information indicates one path loss of at least two path losses, and the at least two path losses are determined based on a first path loss reference signal. Therefore, the terminal device may determine one of the at least two path losses based on the received first downlink control information and the first path loss reference signal, where the path loss may be used for uplink transmission. Based on the method, the terminal device may determine, from at least two path losses, a path loss used for current uplink transmission, thereby ensuring uplink transmission performance.

## Description

This application claims priority to Chinese Patent Application No. 202410176393.5, filed with the China National Intellectual Property Administration on February 7, 2024, and entitled "METHOD FOR DETERMINING PATH LOSS AND COMMUNICATION APPARATUS", which is incorporated herein by reference in its entirety.

### TECHNICAL FIELD

This application relates to the communication field, and more specifically, to a method for determining a path loss and a communication apparatus.

### BACKGROUND

In mobile communication systems, because a transmit power of terminal devices is generally lower than a transmit power of network devices, signal strength of uplink transmission is generally lower than signal strength of downlink transmission. Consequently, the terminal devices have good downlink transmission performance but poor uplink transmission performance.

To resolve this problem, one solution is to deploy some low-cost network devices that have only an uplink transmission function. If such a network device is present near a terminal device, the terminal device can perform uplink transmission via the network device, thereby improving uplink transmission performance. The network device can perform only uplink transmission and cannot perform downlink transmission, that is, the network device does not send downlink reference signals. Therefore, according to the existing solution, the terminal device cannot estimate a path loss (PL for short) of uplink transmission between the terminal device and the network device. Consequently, the terminal device cannot determine an uplink transmit power to the network device, which affects uplink transmission performance.

Therefore, in this scenario, there is a need for a method for determining a path loss, for the terminal device to determine the path loss for the uplink transmission, thereby ensuring the uplink transmission performance.

### SUMMARY

According to the method for determining a path loss provided in this application, a path loss for uplink transmission can be determined, thereby ensuring uplink transmission performance.

This application provides a method for determining a path loss. The method may be performed by a terminal device (for example, a user equipment), or may be performed by a component (for example, a chip or a circuit) of the terminal device. This is not limited herein.

The method may be applied to a terminal side, for example, a terminal, a communication module in the terminal, or a circuit or chip responsible for a communication function in the terminal (for example, a modem (modem) chip, also referred to as a baseband (baseband) chip, or a system on chip (system on chip, SoC) chip or system in package (system in package, SIP) chip including a modem core). The following uses an example in which the method is applied to a terminal device for description.

The method includes: receiving first information, where the first information indicates that a first path loss reference signal is used to determine a first path loss among at least two path losses; receiving the first path loss reference signal; and determining the first path loss based on the first information and the first path loss reference signal, where the first path loss is used for uplink transmission.

In this application, a network device may send a downlink reference signal to the terminal device, where the downlink reference signal may be an SSB or a CSI-RS. In this case, the downlink reference signal may be the first path loss reference signal, and the first path loss reference signal is used for uplink transmission of the terminal device.

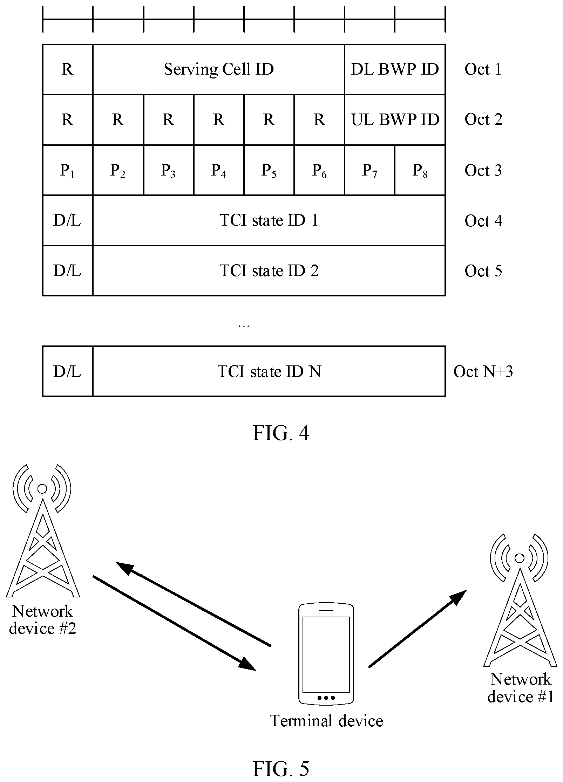

In a possible scenario, the first path loss in this application is a path loss that needs addition of a path loss adjustment amount to a path loss determined based on the first path loss reference signal, where the path loss adjustment amount is a difference between the first path loss and a second path loss. In a possible scenario, the second path loss in this application is a path loss directly determined based on the first path loss reference signal. For example, as shown in FIG. 5, the first path loss is a path loss between the terminal device and a network device #1, and the second path loss is a path loss between the terminal device and a network device #2. The terminal device can perform only uplink transmission to the network device #1, and the terminal device can perform both uplink transmission and downlink transmission with the network device #2.

Based on the foregoing technical solution, in this application, the terminal device may receive the first information from the network device. Because the first information indicates the first path loss among the at least two path losses, and the at least two path losses are determined based on the first path loss reference signal, the terminal device may determine the first path loss based on the received first information and the first path loss reference signal. The first path loss may be used for uplink transmission. Based on the method, the terminal device may determine, from at least two path losses, a path loss used for the current uplink transmission, thereby ensuring uplink transmission performance.

With reference to the first aspect, in a possible implementation, the first information includes an association relationship between a transmission configuration indicator TCI state corresponding to the uplink transmission and a first path loss compensation factor of at least two path loss compensation factors, where the TCI state corresponds to the first path loss reference signal, the at least two path loss compensation factors are in one-to-one correspondence with the at least two path losses, and the first path loss compensation factor corresponds to the first path loss.

In the foregoing implementation, the network device may configure two path loss compensation factors alpha for the terminal device, configure an association relationship between the TCI state and one of the at least two alphas, and send the association relationship to the terminal device.

With reference to the first aspect, in a possible implementation, the first information is at least one of the following: configuration information of a transmission configuration indicator TCI state for the uplink transmission, configuration information of the path loss reference signal, configuration information of a path loss compensation factor for the uplink transmission, and configuration information of an uplink power control parameter for the uplink transmission.

In this implementation, it may also be understood as follows: The configuration information of the TCI state for the uplink transmission, the configuration information of the path loss reference signal, the configuration information of the path loss compensation factor for the uplink transmission, or the configuration information of the uplink power control parameter for the uplink transmission may indicate that the first path loss reference signal is used to determine the first path loss among the at least two path losses. For example, the network device may include a field (for example, a field #1) in the configuration information of the TCI state, the configuration information of the path loss reference signal, the configuration information of the path loss compensation factor, and configuration information of Uplink-powerControl. The field indicates that the first path loss reference signal is used to determine the first path loss among the at least two path losses, or the field indicates whether the path loss adjustment amount is added to the second path loss.

With reference to the first aspect, in a possible implementation, the first information includes first downlink control information, where the first downlink control information includes a first field, a value of the first field indicates that the first path loss reference signal is used to determine the first path loss among the at least two path losses, and the first downlink control information is used to schedule the uplink transmission.

For example, the first field may be a sounding reference signal SRS resource set indicator field in the first downlink control information.

With reference to the first aspect, in a possible implementation, the first information includes an association relationship between second downlink control information and a first control resource set pool index, where the first control resource set pool index is used to determine the first path loss among the at least two path losses, and the first downlink control information is used to schedule the uplink transmission.

For example, the network device may configure the association relationship, and some default rules may be predefined in a protocol. For example, the rules may be: when a value of coresetpoolindex corresponding to DCI (an example of the second downlink control information) is 1, it indicates that the first path loss reference signal corresponding to the current uplink transmission is used to determine the first path loss among the at least two path losses, or the path loss adjustment amount needs to be added to the second path loss estimated based on the first path loss reference signal corresponding to the TCI state.

With reference to the first aspect, in a possible implementation, the method further includes: receiving first indication information, where the first indication information indicates at least two transmission configuration indicator TCI states. The first information includes second indication information, the second indication information indicates, from the at least two TCI states, one TCI state or two TCI states for the uplink transmission, and the one TCI state or two TCI states for the uplink transmission indicate that the first path loss reference signal is used to determine the first path loss among the at least two path losses.

With reference to the first aspect, in a possible implementation, the second indication information indicates that, from the at least two TCI states, the TCI state for the uplink transmission is a first TCI state, where the first TCI state corresponds to the first path loss; or the second indication information indicates that, from the at least two TCI states, the TCI state for the uplink transmission is a second TCI state, where the second TCI state corresponds to the first path loss.

With reference to the first aspect, in a possible implementation, the method further includes: receiving first medium access control control element MAC CE signaling, where the first MAC CE is used to activate at least one TCI state, and the at least one activated TCI state includes the TCI state for the uplink transmission of the terminal device.

With reference to the first aspect, in a possible implementation, the second indication information indicates that, from the at least two TCI states, the TCI state for the uplink transmission is a TCI state corresponding to F_{i,2} in the first MAC CE signaling, where the TCI state corresponding to F_{i,2} in the first MAC CE signaling corresponds to the first path loss; or the second indication information indicates that, from the at least two TCI states, the TCI state for the uplink transmission is a TCI state corresponding to F_{i,1} in the first MAC CE signaling, where the TCI state corresponding to F_{i,1} in the first MAC CE signaling corresponds to the first path loss.

When the network device configures the terminal device to operate in a joint TCI mode, F_{i,1} and F_{i,2} may respectively indicate whether a first joint TCI state and a second joint TCI state that correspond to an i^{th} codepoint in the first MAC CE signaling exist.

With reference to the first aspect, in a possible implementation, the second indication information indicates that, from the at least two TCI states, the TCI state for the uplink transmission is a TCI state corresponding to S_{i,2} in the first MAC CE signaling, where the TCI state corresponding to S_{i,2} in the first MAC CE signaling corresponds to the first path loss; or the second indication information indicates that, from the at least two TCI states, the TCI state for the uplink transmission is a TCI state corresponding to S_{i,1} in the first MAC CE signaling, where the TCI state corresponding to S_{i,1} in the first MAC CE signaling corresponds to the first path loss.

When the network device configures the terminal device to operate in a separate TCI mode, S_{i,1} and S_{i,2} may respectively indicate whether a first UL TCI state and a second UL TCI state that correspond to the i^{th} codepoint in the first MAC CE signaling exist.

With reference to the first aspect, in a possible implementation, the method further includes: obtaining path loss information corresponding to the first path loss reference signal, where the path loss information is used to determine the first path loss. Determining the first path loss based on the first information and the first path loss reference signal includes: determining the first path loss based on the first information, the first path loss reference signal, and the path loss information.

For example, the network device may send an association relationship between the first path loss reference signal and the path loss information. The association relationship may be configured via RRC signaling, or may be sent via MAC CE signaling or DCI signaling. The signaling may be carried on a PDSCH or a PDCCH. The signaling may carry indexes of one or more first downlink reference signals (for example, an SSB index and a CSI-RS index) and one or more pieces of first path loss information, where the indexes of the first downlink reference signals are in one-to-one correspondence with the first path loss information. In this application, the first downlink reference signal may be understood as the first path loss reference signal.

For example, the terminal device may determine the path loss information corresponding to the first path loss reference signal, which may also be understood as follows: The path loss information is determined by the terminal device and does not need to be sent by the network device.

With reference to the first aspect, in a possible implementation, the at least two path losses further include a second path loss, and the second path loss is determined by the terminal device based on a transmit power and a received power of the first path loss reference signal, where the transmit power is a power configured by the network device for sending the first path loss reference signal, and the received power is a received power at which the terminal device receives the first path loss reference signal.

With reference to the first aspect, in a possible implementation, the path loss information includes a path loss adjustment amount, where the path loss adjustment amount indicates a difference between the first path loss and the second path loss. Determining the first path loss based on the first information, the first path loss reference signal, and the path loss information includes: determining the second path loss based on the first path loss reference signal; and determining the first path loss based on the first information, the second path loss, and the path loss adjustment amount.

With reference to the first aspect, in a possible implementation, the path loss information includes the first path loss. In this implementation, the "first path loss" may be understood as "a value corresponding to the first path loss".

With reference to the first aspect, in a possible implementation, the path loss information includes a power difference, where the power difference indicates a difference between a power at which the network device receives a first uplink reference signal and a power at which the network device receives a second uplink reference signal. Determining the first path loss based on the first information, the first path loss reference signal, and the path loss information includes: determining the second path loss based on the first path loss reference signal; and determining the first path loss based on the first information, the second path loss, the power difference, a power for sending the first uplink reference signal, and a power for sending the second reference signal.

With reference to the first aspect, in a possible implementation, the path loss information includes a power at which the network device receives a third uplink reference signal. Determining the first path loss based on the first information, the first path loss reference signal, and the path loss information includes: determining the first path loss based on the first information, a power at which the terminal device sends the third uplink reference signal, and the power at which the network device receives the third uplink reference signal.

According to a second aspect, a method for determining a path loss is provided. The method may be performed by a network device (for example, a base station), or may be performed by a component (for example, a chip, a chip system, or a circuit) of the network device. This is not limited herein.

In a possible implementation solution, in an open RAN architecture, the method may be performed by a CU (CU-CP or CU-UP), a DU, or an RU.

For beneficial effects corresponding to a technical solution on a network side and beneficial effects corresponding to an apparatus, refer to descriptions of beneficial effects on a terminal side. Details are not described herein again.

The method includes: sending first information, where the first information indicates that a first path loss reference signal is used to determine a first path loss among at least two path losses, and the first path loss is used for uplink transmission; and sending the first path loss reference signal.

Specifically, for implementations of the "first information" on the network side, refer to the implementations of the first aspect. Details are not described again.

With reference to the second aspect, in a possible implementation, the method further includes: sending first indication information, where the first indication information indicates at least two transmission configuration indicator TCI states.

With reference to the second aspect, in a possible implementation, the method further includes: receiving first medium access control control element MAC CE signaling, where the first MAC CE is used to activate at least one TCI state, and the at least one activated TCI state includes a TCI state for uplink transmission of a terminal device.

With reference to the second aspect, in a possible implementation, the method further includes: sending path loss information corresponding to the first path loss reference signal, where the path loss information is used to determine the first path loss.

According to a third aspect, a communication apparatus is provided. The apparatus is configured to perform the method according to any one of the possible implementations of the first aspect. Specifically, the apparatus may include units and/or modules, for example, a transceiver unit and/or a processing unit, configured to perform the method according to any one of the possible implementations of the first aspect.

In an implementation, the apparatus is a terminal device. When the apparatus is a communication device, a communication unit may be a transceiver or an input/output interface, and a processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is a chip, a chip system, or a circuit used in a communication device, a communication unit may be an input/output interface, an interface circuit, an output circuit, an input circuit, a pin, a related circuit, or the like of the chip, the chip system, or the circuit, and a processing unit may be at least one processor, a processing circuit, a logic circuit, or the like.

According to a fourth aspect, a communication apparatus is provided. The apparatus is configured to perform the method according to any one of the possible implementations of the second aspect. Specifically, the apparatus may include units and/or modules, for example, a transceiver unit and/or a processing unit, configured to perform the method according to any one of the possible implementations of the second aspect.

In an implementation, the apparatus is a network device. When the apparatus is a communication device, a communication unit may be a transceiver or an input/output interface, and a processing unit may be at least one processor. Optionally, the transceiver may be a transceiver circuit. Optionally, the input/output interface may be an input/output circuit.

In another implementation, the apparatus is a chip, a chip system, or a circuit used in a network device. When the apparatus is a chip, a chip system, or a circuit used in a communication device, a communication unit may be an input/output interface, an interface circuit, an output circuit, an input circuit, a pin, a related circuit, or the like of the chip, the chip system, or the circuit, and a processing unit may be at least one processor, a processing circuit, a logic circuit, or the like.

In still another possible implementation, the apparatus may be a CU (CU-CP or CU-UP), a DU, or an RU in a network device.

According to a fifth aspect, a communication apparatus is provided. The apparatus includes at least one processor, configured to execute a computer program or instructions stored in a memory, to perform the method according to any one of the possible implementations of the first aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a terminal device.

In another implementation, the apparatus is a chip, a chip system, or a circuit used in a terminal device.

According to a sixth aspect, a communication apparatus is provided. The apparatus includes at least one processor, configured to execute a computer program or instructions stored in a memory, to perform the method according to any one of the possible implementations of the second aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a network device.

In another implementation, the apparatus is a chip, a chip system, or a circuit used in a network device.

In still another implementation, the apparatus may be a CU (CU-CP or CU-UP), a DU, or an RU in a network device.

The communication apparatus may be a terminal, a communication module in the terminal, or a chip that is responsible for a communication function in the terminal, for example, a modem chip (also referred to as a baseband chip), or an SoC or SIP chip that includes a modem module.

According to a seventh aspect, this application provides a processor, including an input circuit, an output circuit, and a processing circuit. The processing circuit is configured to: receive a signal through the input circuit, and transmit a signal through the output circuit, so that the processor performs the method according to any one of the possible implementations of any one of the first aspect and the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a transceiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

Operations such as sending and obtaining/receiving related to the processor may be understood as operations such as outputting, receiving, and inputting of the processor or sending and receiving operations performed by a radio frequency circuit and an antenna, unless otherwise specified, or provided that the operations do not contradict actual functions or internal logic of the operations in related descriptions. This is not limited in this application.

According to an eighth aspect, a processing device is provided, including a processor and a memory. The processor is configured to: read a computer program or instructions stored in the memory, receive a signal through a transceiver, and transmit a signal through a transmitter, to perform the method according to any one of the possible implementations of any one of the first aspect and the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the transceiver. The transmitter and the transceiver may be collectively referred to as a transceiver.

The processing device in the eighth aspect may be one or more chips. The processor in the processing device may be implemented by using hardware, or may be implemented by using software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

According to a ninth aspect, a computer-readable storage medium is provided. The computer-readable storage medium stores program code to be executed by a device, and the program code is used to perform the method according to any one of the possible implementations of any one of the first aspect and the second aspect.

According to a tenth aspect, a computer program product including instructions is provided. When the computer program product runs on a computer, the computer is caused to perform the method according to any one of the possible implementations of the first aspect and the second aspect.

According to an eleventh aspect, a chip system is provided, including a processor configured to invoke a computer program from a memory and run the computer program, so that a device in which the chip system is installed performs the method according to the implementations of any one of the first aspect and the second aspect.

According to a twelfth aspect, a communication system is provided. The communication system includes a terminal device and a network device. The terminal device is configured to perform the method according to any one of the possible implementations of the first aspect, and the network device is configured to perform the method according to any one of the possible implementations of the second aspect.

### BRIEF DESCRIPTION OF DRAWINGS

FIG. 1 is a diagram of a communication scenario to which this application is applicable;
FIG. 2 is a diagram of an architecture of a communication system to which this application is applicable;
FIG. 3 is a diagram of a network element function and a protocol layer structure of an open radio access network O-RAN according to this application;
FIG. 4 is a diagram of a format of signaling for activating a TCI state according to this application;
FIG. 5 is another diagram of a communication scenario to which this application is applicable;
FIG. 6 is a schematic flowchart of a method 600 for determining uplink transmission according to this application;
FIG. 7a and FIG. 7b are diagrams of other formats of signaling for activating a TCI state according to this application;
FIG. 8 is a schematic block diagram of a communication apparatus 100 according to this application; and
FIG. 9 is a schematic block diagram of a communication apparatus 200 according to this application.

### DESCRIPTION OF EMBODIMENTS

The following describes the technical solutions of this application with reference to the accompanying drawings.

The technical solutions provided in this application may be applied to various communication systems, such as a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system like a long term evolution (long term evolution, LTE) system, a 5th generation (5th generation, 5G) mobile communication system like a new radio (new radio, NR) system, and a future evolved communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like described with reference to the accompanying drawings. In addition, a combination of these solutions may be used.

In addition, in embodiments of this application, terms such as "example" and "for example" represent giving an example, an illustration, or a description. Any embodiment or design scheme described as an "example" in this application should not be explained as being more preferred or having more advantages than another embodiment or design scheme. Exactly, the term "example" is used to present a concept in a specific manner. In embodiments of this application, "of (of)", "corresponding, relevant (corresponding, relevant)", and "corresponding (corresponding)" may be interchangeably used sometimes. It should be noted that meanings expressed by the terms are consistent when differences of the terms are not emphasized.

The communication system and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The "terminal device" in this application may also be understood as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device having a wireless connection function. Currently, some examples of the terminal are a mobile phone (mobile phone), a tablet computer, a notebook computer, a palmtop computer, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home) (for example, a game console, a smart television, a smart speaker, a smart refrigerator, and fitness equipment), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a transport vehicle having a wireless communication function, a communication module, a roadside unit (roadside unit, RSU) having a terminal function, a terminal device in a 5G network, a terminal device in a future evolved public land mobile communication network (public land mobile network, PLMN), and the like. This is not limited in embodiments of this application.

By way of example but not limitation, in embodiments of this application, the terminal device may alternatively be a wearable device. The wearable device may also be referred to as an intelligent wearable device, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, intelligent wearable devices include full-featured and large-sized devices that can implement all or some functions without relying on smartphones, for example, smart watches or smart glasses, and devices that focus only on a specific type of application function and need to be used together with other devices such as smartphones, for example, various smart bands or smart jewelry for monitoring physical signs.

In addition, in embodiments of this application, the terminal device may alternatively be a terminal device in an IoT system. An IoT is an important part of future information technology development. A main technical feature of the IoT is to connect articles to a network by using a communication technology, to implement an intelligent network for human-machine interconnection and thing-thing interconnection.

It should be noted that the terminal device and an access network device may communicate with each other by using an air interface technology (for example, an NR technology or an LTE technology). Terminal devices may also communicate with each other by using an air interface technology (for example, an NR technology or an LTE technology).

In embodiments of this application, an apparatus configured to implement a function of the terminal device may be a terminal device, or may be an apparatus that can support the terminal device in implementing the function, for example, a chip system or a chip. The apparatus may be installed in the terminal device. In embodiments of this application, the chip system may include a chip, or may include a chip and another discrete device.

The "network device" in this application may also be understood as a radio access network (radio access network, RAN), and is configured to provide a network access function for an authorized user in a specific area, and can use transmission tunnels of different quality based on a user level, a service requirement, and the like. An RAN network element can manage a radio resource and provide an access service for the terminal device, to forward a control signal and user data between the terminal device and a core network. The RAN may also be understood as a base station in a conventional network. The network device in this application may alternatively be a radio controller in a cloud radio access network (cloud radio access network, CRAN) scenario. The network device may alternatively be a base station device in a future 5G network or a network device in a future evolved PLMN network. The network device may alternatively be a wearable device or a vehicle-mounted device.

The network device may alternatively be a transmission reception point (transmission reception point, TRP), where the TRP is a device or module having a corresponding communication function. A communication module, circuit, or chip that performs a corresponding communication function is usually disposed in the TRP. The TRP may be further configured with a program or instructions for performing a corresponding communication function.

For example, the TRP in embodiments of this application may be a RAN device or network element deployed in the radio access network (radio access network, RAN). For example, the TRP may be a RAN device or an apparatus that can support a RAN device implementing a function, for example, a chip system or a combined device or component that can implement a function of an access network device, and the apparatus may be installed in the RAN device. For another example, the TRP may be an access point (access point, AP) in a Wi-Fi system, such as a home gateway, a router, a server, a switch, a bridge, a base station, a base station controller (base station controller, BSC), a base transceiver station (base transceiver station, BTS), a home base station, a baseband unit (baseband unit, BBU), a wireless relay node, or a wireless backhaul node; or may be an evolved NodeB (evolved NodeB, eNB) in a 4G system, a next-generation eNB (ng-eNB) during transition from 4G to 5G, a next generation base station (next generation NodeB, gNB) in a 5G system, or a RAN node that implements (partial) functions of a gNB. The RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). Alternatively, the TRP may be a satellite or a base station in various forms in the future. In addition, the TRP may be a macro base station, or may be a micro base station or an indoor base station, or may be a relay node, a donor node, or the like.

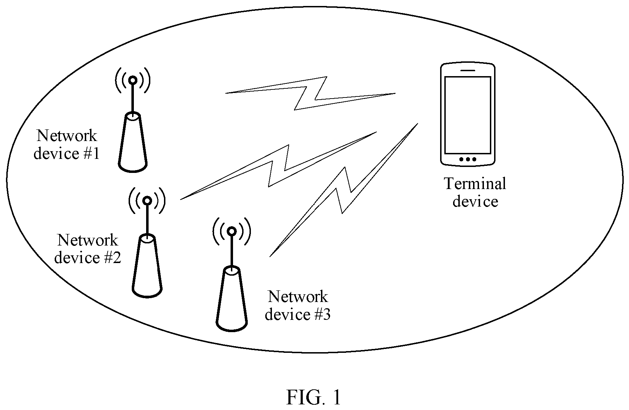

FIG. 1 is a diagram of a communication scenario to which this application is applicable. As shown in FIG. 1, the communication scenario to which this application is applicable includes a plurality of network devices, and a terminal device may simultaneously perform data and/or control signaling transmission with the plurality of network devices.

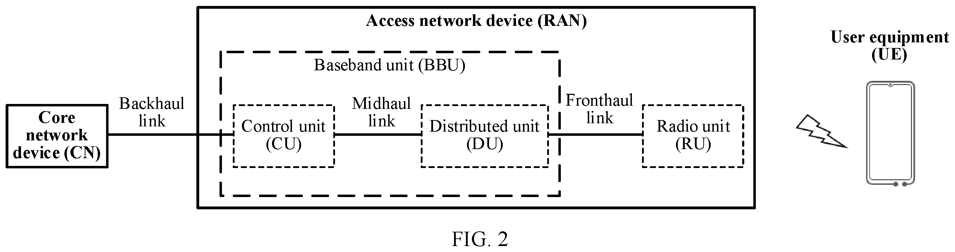

FIG. 2 is a diagram of an architecture of a communication system to which this application is applicable. As shown in FIG. 2, the architecture of the communication system in this application is an example of an open radio access network (open radio access network, O-RAN) system. It should be understood that the O-RAN system may include another component other than components shown in FIG. 2. An access network device in FIG. 2 may be, for example, an eNB, a gNB, or a next-generation access network device, communicates with a core network (core network, CN) via a backhaul (backhaul) link, and communicates with a user equipment (user equipment, UE) via an air interface. Specifically, a baseband unit (baseband unit, BBU) in the access network device may communicate with the core network via the backhaul (backhaul) link, and a radio unit (radio unit, RU) in the access network device may communicate with at least one UE via the air interface. The BBU communicates with at least one RU via a fronthaul link. The BBU and the RU may be co-located, or may not be co-located. The BBU includes at least one control unit (control unit, CU) and at least one distributed unit (distributed unit, DU), which may communicate with each other via at least one midhaul (midhaul) link.

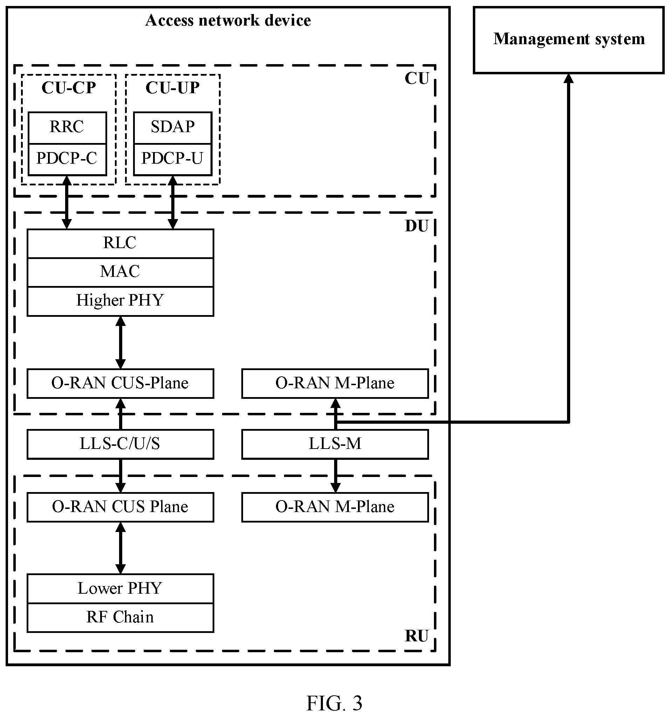

FIG. 3 is a diagram of a network element function and a protocol layer structure of an open radio access network O-RAN according to this application. As shown in FIG. 3, in some examples, a CU is a logical node that carries a radio resource control (radio resource control, RRC) layer, a service data adaptation protocol (service data adaptation protocol, SDAP) layer, a packet data convergence protocol (packet data convergence protocol, PDCP) layer, and another control function of an access network device. The CU is connected to network nodes such as a core network via some interfaces. These interfaces may be E2 interfaces or the like. Optionally, the CU may have some functions of the core network. The CU (for example, the PDCP layer and a higher layer) is connected to a DU (for example, an RLC layer and a lower layer) via some interfaces. These interfaces may be F1 interfaces or the like. In some examples, these interfaces (such as F1 interfaces) may provide control plane (control plane, C-Plane) and user plane (user plane, U-Plane) functions (such as interface management, system information management, UE context management, and RRC message transmission). F1AP is an application protocol for the F1 interface, and in some examples, specifies an F1 signaling procedure. The F1 interface supports a control plane F1-C and a user plane F1-U.

In some examples, the CU may be split into a control unit-control plane (control unit-control plane, CU-CP) and a control unit-user plane (control unit-user plane, CU-UP). The CU-CP is a logical node that carries the RRC layer and a control plane part of PDCP (control plane part of PDCP, PDCP-C) layer, and is configured to implement a control plane function of the CU. The CU-CP may interact with a network element configured to implement the control plane function in the core network. The network element configured to implement the control plane function in the core network may be an access and mobility function network element, for example, an access and mobility management function (access and mobility management function, AMF) in a 5G system. The AMF network element is configured to be responsible for mobility management in a mobile network, for example, location update of a terminal device, network registration of the terminal device, and handover of the terminal device. The CU-UP is a logical node that carries the SDAP layer and a user plane part of PDCP (user plane part of PDCP, PDCP-U) layer, and is configured to implement a user plane function of the CU. The CU-UP may interact with a network element configured to implement the user plane function in the core network. The network element configured to implement the user plane function in the core network, for example, a user plane function (user plane function, UPF) network element in the 5G system, is configured to be responsible for forwarding and receiving data in the terminal device. The foregoing configurations of the CU and the DU are merely examples. Alternatively, functions of the CU and the DU may be configured based on a requirement. For example, the CU or the DU may be configured to have functions of more protocol layers, or the CU or the DU may be configured to have some processing functions of a protocol layer. For example, some functions of the RLC layer and functions of a protocol layer above the RLC layer are configured in the CU, and remaining functions of the RLC layer and functions of a protocol layer below the RLC layer are configured in the DU. For another example, the functions of the CU or the DU may be divided based on service types or other system requirements. For example, division may be performed based on latencies. Functions whose processing time needs to satisfy a low-latency requirement are configured in the DU, and functions whose processing time does not need to satisfy the latency requirement are configured in the CU.

In some examples, the DU is a logical node that carries a radio link control (radio link control, RLC) layer, a medium access control (medium access control, MAC) layer, a higher physical layer (higher physical layer, Higher PHY), and other functions. In some examples, the DU may control at least one RU. The DU is connected to the RU via some interfaces, and these interfaces may be fronthaul interfaces. In some examples, the higher PHY layer includes part of PHY layer processing, for example, processing functions such as forward error correction (forward error correction, FEC) encoding and decoding, scrambling, modulation, and demodulation.

In some examples, the RU is a logical node that carries a lower physical layer (lower physical layer, Lower PHY) and radio frequency (radio frequency, RF) processing. In some examples, the RU may be a 3GPP transmission reception point, a remote radio head (remote radio head, RRH), or another entity with a similar function. In some examples, the low-PHY includes part of PHY processing, for example, fast Fourier transform (fast Fourier transform, FFT), inverse fast Fourier transform (inverse fast Fourier transformation, IFFT), digital beamforming, filtering, and other processing functions. The RU communicates with one or more UEs via a radio link.

The DU and the RU may be co-located, or may not be co-located. The DU and the RU exchange control plane information and user plane information via a fronthaul link and a lower-layer split control, user, and synchronization plane (lower-layer split CUS-Plane, LLS-CUS) interface. The LLS-CUS may include an LLS-C interface and an LLS-U interface that respectively provide a control plane (C-Plane) and a user plane (U-Plane). In some examples, the control plane (C-Plane) is real-time control between the DU and the RU. The DU and the RU exchange management information via an LLS-M interface of the fronthaul link. A management plane (M-Plane) is a non-real-time management operation between the DU and the RU.

The DU and the RU may cooperate to jointly implement functions of the PHY layer. One DU may be connected to one or more RUs. Functions of the DU and the RU may be configured in a plurality of manners based on a design. For example, the DU is configured to implement a baseband function, and the RU is configured to implement an intermediate frequency/radio frequency function. For another example, the DU is configured to implement a higher layer function of the PHY layer, and the RU is configured to: implement a lower layer function of the PHY layer, or implement the lower layer function and a radio frequency function. The higher layer function of the physical layer may include some functions of the physical layer, which are closer to the MAC layer. The lower layer function of the physical layer may include some other functions of the physical layer, which are closer to an intermediate radio frequency side.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application.

For ease of understanding the technical solutions of this application, the following first briefly describes some specific technical terms in this application.

### 1. Uplink transmission

The "uplink transmission" in this application may be carried on one or more of a physical uplink control channel (physical uplink control uplink channel, PUCCH), a physical uplink shared channel (physical uplink shared channel, PUSCH), and a physical random access channel (physical random access channel, PRACH).

The uplink transmission may be sending of uplink information. The uplink information may be one or more of uplink control information (uplink control information, UCI), scheduling request (scheduling request, SR) information, channel state information (channel state information, CSI), a hybrid automatic repeat request (hybrid automatic repeat request, HARQ), and medium access control control element (medium access control control element, MAC CE) signaling. The uplink transmission may alternatively be sending of an uplink reference signal. For example, the uplink reference signal may be a channel sounding reference signal (sounding reference signal, SRS) or the like.

### 2. Reference signal (reference signal, RS)

The reference signal may also be referred to as a pilot signal (pilot signal), and is a known signal that is provided by a transmitter device for a receiving device and that is used for channel estimation, channel measurement, channel sounding, channel demodulation, or the like.

In embodiments of this application, the reference signal may be used in a physical layer (physical layer), and does not carry data information from a higher layer. In addition, the reference signal may include a downlink reference signal and an uplink reference signal.

The downlink reference signal includes a downlink cell-specific reference signal (cell-specific reference signal, CRS), a downlink user equipment-specific reference signal (UE-specific reference signal, UE-RS), a downlink channel state information reference signal (channel state information reference signal, CSI-RS) used for channel measurement, a downlink group-specific reference signal (group-specific reference signal, GRS), a downlink positioning reference signal (positioning reference signal, PRS), a downlink beam reference signal (beam reference signal, BRS), a downlink beam refinement reference signal (beam refinement reference signal, BRRS), a downlink phase compensation reference signal (phase compensation reference signal, PCRS), a downlink path loss reference signal (path loss reference signal, PL-RS), and the like. The downlink UE-RS is also referred to as a downlink demodulation reference signal (demodulation reference signal, DMRS). There is also a synchronization signal/physical broadcast channel block (synchronization signal/physical broadcast channel block, SS/PBCH block). The SS/PBCH block may be briefly referred to as a synchronization signal block (synchronization signal block, SSB).

The uplink reference signal includes a demodulation reference signal (demodulation reference signal, DMRS) used for uplink demodulation, a sounding reference signal (sounding reference signal, SRS) used for uplink channel measurement, an uplink PCRS, or the like. A DMRS used for physical uplink control channel (physical uplink control channel, PUCCH) demodulation is referred to as a PUCCH DMRS, and a DMRS used for physical uplink shared channel (physical uplink shared channel, PUSCH) demodulation is referred to as a PUSCH DMRS.

In addition to the reference signal, the reference signal in this application may alternatively be a sequence signal in a set of sequence signals having good correlation characteristics. The good correlation characteristics mean that any sequence in the set has a large autocorrelation peak, and any two sequences in the set have a small cross-correlation peak. To be specific, in embodiments of this application, a sending device may send a plurality of signals, where at least one of the signals is a sequence signal having the good correlation characteristics, for example, a pseudo random (pseudo random) sequence and a Zadoff-Chu (Zadoff-Chu) sequence.

Specifically, correlation means that correlation calculation is performed between one sequence signal and another sequence signal that are in a same set, to obtain a correlation value. Therefore, for the sequence signal having the good correlation characteristics, the receiving device can detect, based on the correlation characteristics, whether the signal exists. In other words, transmission of the sequence signal having the correlation characteristics does not require use of a detection mechanism like a pilot. A reference signal (or a pilot signal) may be one of signals having the good correlation characteristics.

It should be understood that the foregoing listed specific examples of the sequence signal are merely examples for description, and this application is not limited thereto. For example, the sequence signal may alternatively be a signal for carrying feedback information (for example, acknowledgment (acknowledgment, ACK) information or negative-acknowledgment (negative-acknowledgment, NACK) information), a resource request signal, a measurement request signal, or the like.

### 3. Transmission configuration indicator state (transmission configuration indicator state, TCI state)

A network device may generate different beams that point to different transmission directions. In downlink data transmission, when sending data to a terminal device by using a specified beam, the network device needs to notify the terminal device of information about the transmit beam used by the network device, so that the terminal device can receive, by using a receive beam corresponding to the transmit beam, the data sent by the network device. In the 3GPP R15/R16 specifications, the network device indicates related information of the transmit beam used by the network device to the terminal device by using a transmission configuration indicator (transmission configuration indicator, TCI) field in downlink control information (downlink control information, DCI). Specifically, a size of the TCI field is 3 bits, and may specifically represent eight different field values (codepoints). Each value of the TCI field corresponds to an index of a TCI state, and the index of the TCI state may uniquely identify a TCI state. The TCI state includes several parameters, and the related information of the transmit beam may be determined by using these parameters.

The TCI state is configured by the network device for each terminal device. Each TCI state includes an index (denoted as tci-StateId) of the TCI state and two pieces of quasi co-location information (quasi co-location information, QCL-Info). Each piece of QCL-Info includes a cell (cell) field and a bandwidth part identifier (bandwidth part identifier, bwp-Id), indicating a bandwidth part (bandwidth part, BWP) of a cell (cell) to which the TCI state is applied. In other words, different QCL-Info may be configured for different cells or different BWPs of a same cell. The QCL-Info further includes an indication of a reference signal, which indicates a reference signal resource with which a quasi co-location (quasi co-location, QCL) relationship is formed. In the R15/R16 specifications, the term "beam" is usually not directly used, and the beam is usually replaced with another term. For example, in both data transmission and channel measurement, the beam corresponds to a reference signal resource, and one beam corresponds to one reference signal resource. Therefore, a reference signal resource with which a QCL relationship is formed is essentially a beam with which a QCL relationship is formed. The QCL relationship means that two reference signal resources (or two antenna ports, where antenna ports are in one-to-one correspondence with reference signal resources) have some same spatial parameters. Specific spatial parameters that are same depend on a type of the QCL-Info, namely, another field qcl-Type of the QCL-Info. The qcl-Type may have four values, including:
type A (type A): a Doppler shift, a Doppler spread, an average delay, and a delay spread;
type B (type B): a Doppler shift and a Doppler spread;
type C (type C): a Doppler shift and an average delay; and
type D (type D): a spatial receive parameter.

The type D is used as an example. The type D indicates that two reference signal resources have same spatial receive parameter information. That is, two beams have a same receive beam. Generally, at most one of the two pieces of QCL-Info included in the TCI state is the type D.

Before the terminal device uses the TCI state, the following three procedures may be included: "configuration", "activation", and "indication", each of which is described below.
(1) TCI state configuration: The network device configures a plurality of TCI states for the terminal device via radio resource control (radio resource control, RRC) signaling.
(2) TCI state activation: After configuring the plurality of TCI states, the network device further needs to activate eight of the TCI states via a MAC CE. The eight TCI states are in one-to-one correspondence with eight values of a TCI field in DCI. To be specific, specific eight TCI states corresponding to the eight values of the TCI field in the DCI are determined via the MAC CE signaling.
(3) TCI state indication: The network device indicates a specific TCI state via the TCI field in the DCI. The terminal device can determine, based on a specific value of the TCI field, a receive beam corresponding to a data transmit beam, to receive data by using the corresponding receive beam.

### 4. Unified (unified) TCI

A unified TCI is introduced in R17. The unified TCI is a unified beam indication framework in which a network device may indicate a beam to a terminal device, and the beam is used simultaneously for a plurality of channels and/or reference signals. A common beam may be an uplink common beam, a downlink common beam, or an uplink and downlink common beam. The terminal device may use the common beam in subsequent transmission. In other words, the network device may indicate one uplink common beam to the terminal device for transmission of a plurality of uplink channels and/or uplink reference signals. Alternatively, one downlink common beam may be indicated to the terminal device for transmission of a plurality of downlink channels and/or downlink reference signals. Alternatively, one uplink and downlink common beam may be indicated to the terminal device for transmission of a plurality of uplink channels and/or uplink reference signals and a plurality of downlink channels and/or downlink reference signals. In other words, the uplink and downlink common beam may be used for both uplink transmission and downlink transmission.

For example, in R17 and later releases, the terminal may be configured with two types of TCI states: DLorjointTCI and UL TCI. An example in which the terminal device is a UE and the network device is a base station is used. For example, the UE may be configured with both joint (joint)/downlink (downlink, DL) TCI states (up to 128) and UL TCI states (up to 64). For another example, the base station may configure, in serving cell configuration (serving cell configuration) of RRC signaling, a TCI mode currently used by the UE as a joint mode or a separate (separate) mode. In the joint mode, it is indicated that a joint TCI state can be used for both uplink transmission and downlink transmission. In the separate mode, the base station needs to indicate that a DL TCI state and a UL TCI state are respectively used for downlink transmission and uplink transmission.

When receiving TCI state activation signaling indicated by a MAC CE, where the activation signaling includes a TCI state identifier (identifier, ID), the UE determines, based on RRC configuration, a TCI indicated via the MAC CE.

For example, FIG. 4 shows an implementation example of the TCI state activation signaling. If the RRC configuration indicates the joint mode for the UE, the TCI state ID is an ID of the joint TCI state. If the RRC configuration indicates the separate mode for the UE, the UE determines, based on a value of a D/L field, whether the TCI state ID is an ID of the DL TCI state or an ID of the uplink (uplink, UL) TCI state (for example, 0 indicates UL TCI, and 1 indicates DL TCI).

### 5. Path loss (path loss, PL)

The "path loss" in this application may be used interchangeably with terms such as pathloss, transmission loss, signal attenuation, signal attenuation loss, attenuation loss, transmission loss, signal loss, transmission path loss, path loss estimation value, and path loss estimation value. In existing protocols, a terminal device may estimate the path loss via downlink reference signals such as a "synchronization signal and physical broadcast channel block (synchronization signal and PBCH block, SSB)" and a channel state information reference signal (channel state information reference signal, CSI-RS). Alternatively, the path loss may be estimated via an uplink reference signal (for example, an SRS). Specific reference signals as path loss reference signals are not limited in this application.

Generally, the path loss is calculated as PL = referenceSignalPower - higher layer filtered RSRP, where "referenceSignalPower" may be understood as a power configured by a network device for sending a reference signal, and "higher layer filtered RSRP" may be understood as a power at which the terminal receives a reference signal, which is filtered by a higher layer. A difference between the two powers is a path loss.

In the protocols, a downlink reference signal used for path loss estimation is referred to as a "path loss reference signal (path loss reference signal, PL RS)". For example, when the PL RS is an SSB, referenceSignalPower = ss-PBCH-Blockpower, where "ss-PBCH-Blockpower" is configured by the network device. When the PL RS is a periodic CSI-RS, referenceSignalPower = ss-PBCH-Blockpower + powerControlOffsetSS, where "powerControlOffsetSS" is an offset configured by the network device relative to a power of the SSB. When a value of the offset is not configured, the value is 0 by default.

### 6. Transmit power

In a unified beam indication (unified TCI) framework, a TCI state (DLorjointTCI state or UL TCI state) is associated with a path loss reference signal. During uplink transmission, a terminal device determines, based on a TCI state indicated or configured for the uplink transmission, the path loss reference signal, and estimates, based on the path loss reference signal, a value corresponding to a path loss. In addition, the TCI state is further associated with an uplink power control parameter "ul-powerControl". The parameter includes a power control parameter set AlphaSet for SRS, a PUCCH, and a PUSCH. Each AlphaSet includes: a reference power (p0), a path loss compensation factor (alpha), and a closed-loop power control adjustment state index (closedLoopindex).

A transmit power of the PUSCH, the PUCCH, the SRS, and a PRACH by the terminal device is mainly related to a maximum transmit power of the terminal device, a received power level expected by a network device, a path loss, a path loss compensation factor, a closed-loop power control adjustment amount, a power adjustment state, a quantity of transmission resource blocks, a subcarrier spacing, and the like.
(1) In a PUSCH example, a transmit power **P**_{PUSCH,b,f,c}(**i**, **j, q_{d}**, **l**) of a UE satisfies the following formula: $\begin{matrix}{P}_{PUSCH , b , f , c} \left(i, j, {q}_{d}, l\right) = \\ min \left\{\begin{matrix}{P}_{CMAX , f , c} \left(i\right) \\ {P}_{O _ PUCCH , b , f , c} \left(j\right) + 10 {log}_{10} \left({2}^{μ}⋅{M}_{RB , b , f , c}^{PUCCH}\left(i\right)+{α}_{b , f , c}\left(j\right)⋅{PL}_{b , f , c}\left({q}_{d}\right)+{Δ}_{TF , b , f , c}\left(i\right)+{f}_{b , f , c}\left(i, l\right)\right)\end{matrix}\right\}\end{matrix}$ (1)
   A value of P_{PUSCH,b,f,c}(i, j, q_{d}, l) is the minimum of two items within the foregoing curly brackets.
   b, f, and c correspond to a UL BWP index, a carrier index, and a serving cell index.
   i corresponds to a transmission occasion, and is defined by a slot index in a system frame number, a symbol in a slot, and the like.
   j is a parameter set configuration index. For example, j = 0 represents power control for a message 3 (msg3); j = 1 represents PUSCH power control for a configured grant configuration (ConfiguredGrantConfig); and j = 2 to J represents other normal power control.
   qd is a path loss reference signal index (which may be an SSB or a CSI-RS, and is determined by a path loss reference signal associated with a TCI state for uplink transmission in the unified TCI framework).
   µ is a subcarrier spacing configuration index.
   1 is a power control adjustment state index.
   P_{CMAX,f,c}(i) is a maximum transmit power of the UE.
   P_{O_PUSCH,b,f,c}(j) is a received power level expected by the network device.
   **α_{b,f,c}(j) is a path loss compensation factor.**
   **PL_{b,f,c}(q_{d}) is a downlink path loss estimated by the terminal based on a path loss reference signal.**
   ${M}_{RB , b , f , c}^{PUSCH} \left(i\right)$ is a quantity of resource blocks allocated for sending the PUSCH.
   Δ_{TF,b,f,c}(i) is a power offset value for different modulation and coding scheme (modulation and coding scheme, MCS) formats relative to a reference MCS.
   f_{b,f,c}(i, l) is a transmit power adjustment amount obtained from transmit power control (transmit power control, TPC) information on a physical downlink control channel (physical downlink control channel, PDCCH).
(2) In an SRS example, a transmit power P_{SRS,b,f,c}(i, qₛ, l) of a UE satisfies: $\begin{matrix}{P}_{SRS , b , f , c} \left(i, {q}_{s}, l\right) = \\ min \left\{\begin{matrix}{P}_{CMAX , f , c} \left(i\right) \\ {P}_{O _ SRS , b , f , c} \left(j\right) + 10 {log}_{10} \left({2}^{μ}⋅{M}_{SRS , b , f , c}\left(i\right)+{α}_{SRS , b , f , c}\left({q}_{s}\right)⋅{PL}_{b , f , c}\left({q}_{d}\right)+{h}_{b , f , c}\left(i, l\right)\right)\end{matrix}\right\}\end{matrix}$ (2)
   A value of P_{SRS,b,f,c}(i, qₛ, l) is the minimum of two items within the foregoing curly brackets.
   P_{O_SRS,b,f,c}(j) is a received power level expected by the network device.
   α_{SRS,b,f,c}(qₛ) is a path loss compensation factor.
   M_{SRS,b,f,c}(i) is a quantity of resource blocks allocated for sending the SRS.
   qₛ is a path loss reference signal index (which may be an SSB or a CSI-RS, and is determined by a path loss reference signal associated with a TCI state for uplink transmission in the unified TCI framework).
   h_{b,f,c}(i, l) is a transmit power adjustment amount obtained from transmit power control TPC information on a PDCCH.
   For other parameters, refer to definitions of parameters in P_{PUSCH,b,f,c}(i, j, q_{d}, l) in Formula (1).
(3) In another example, a PUCCH is used as an example, and a transmit power P_{SRS,b,f,c}(i, qₛ, l) of a UE satisfies: $\begin{matrix}{P}_{PUCCH , b , f , c} \left(i, {q}_{u}, {q}_{d}, l\right) = \\ min \left\{\begin{matrix}{P}_{CMAX , f , c} \left(i\right) \\ {P}_{O _ PUCCH , b , f , c} \left({q}_{u}\right) + 10 {log}_{10} \left({2}^{μ}⋅{M}_{RB , b , f , c}^{PUCCH}\left(i\right)+{PL}_{b , f , c}\left({q}_{d}\right)+{Δ}_{F _ PUCCH}\left(F\right)+{Δ}_{TF , b , f , c}\left(i\right)+{g}_{b , f , c}\left(i, l\right)\right)\end{matrix}\right\}\end{matrix}$ (3)
   A value of P_{PUCCH,b,f,c}(i, qᵤ, q_{d}, l) is the minimum of two items within the foregoing curly brackets.
   qᵤ is a path loss reference signal index (which may be an SSB or a CSI-RS, and is determined by a path loss reference signal associated with a TCI state for uplink transmission in the unified TCI framework).
   P_{O_PUCCH,b,f,c}(qᵤ) is a received power level expected by the network device.
   ${M}_{RB , b , f , c}^{PUCCH} \left(i\right)$ is a quantity of resource blocks allocated for sending the PUCCH.
   Δ_{F_PUCCH}(F) is a power offset value for different MCS formats relative to a reference MCS.
   g_{b,f,c}(i, l) is a transmit power adjustment amount obtained from transmit power control TPC information on a PDCCH.
   For other parameters, refer to definitions of parameters in P_{PUSCH,b,f,c}(i, j, q_{d}, l) in Formula (1).

### 7. Spatial relation (spatial relation)

In a current protocol, the "spatial relation" may indicate an uplink beam. A transmit beam for uplink transmission is indicated by the spatial relation. Similar to a function of a TCI state, a function of the spatial relation is to notify a terminal device of a transmit beam for uplink transmission.

Generally, the spatial relation may be preconfigured via RRC signaling, including an ID of the spatial relation, a cell ID, a target reference signal resource, a path loss measurement reference signal, a power control parameter, and the like. The target reference signal resource (which may be one of an SRS/an SSB/a CSI-RS) indicates the corresponding uplink beam. If a spatial relation #1 is used for uplink transmission, and the spatial relation #1 includes a target reference signal resource #2, it indicates that a transmit beam used for the uplink transmission is a transmit/receive beam of a target reference signal. For example, when the target reference signal resource is an uplink resource like an SRS, it indicates that the transmit beam used for the uplink transmission is a transmit beam of the SRS (where the transmit beam of the SRS is known). For another example, when the target reference signal resource is a downlink resource like an SSB/a CSI-RS, it indicates that the transmit beam used for the uplink transmission is a receive beam of the SSB/CSI-RS (where the receive beam of the SSB/CSI-RS is known).

A network device may configure a plurality of spatial relations for the terminal device. Then, one of the spatial relations is activated via a MAC CE for corresponding data transmission. The uplink transmission includes a PUCCH, an SRS, a PUSCH, and the like, which require corresponding spatial relations. The spatial relation of the PUCCH is indicated via MAC CE signaling. The spatial relation of the SRS is also indicated via the MAC CE signaling. During PUSCH transmission, a specific SRS is associated, and the spatial relation of the SRS is used for transmission.

### 8. First path loss and second path loss

The "second path loss" mentioned in this application may be understood as a second path loss determined based on a first path loss reference signal. For example, the path loss may be determined based on the foregoing path loss calculation formula "PL = referenceSignalPower - higher layer filtered RSRP".

The "second path loss" in this application may also be understood as PL#2.

The "first path loss" mentioned in this application may be understood as any one of at least two path losses. For example, the first path loss may be PL#1. For another example, the first path loss may be PL#2.

The "first path loss" in this application may also be understood as the second path loss determined based on the first path loss reference signal, with a path loss adjustment amount applied thereto. The path loss adjustment amount may be denoted as PL_{offset} or ΔPL, representing a difference between the first path loss and the second path loss, or a difference between the second path loss and the first path loss.

FIG. 5 is another diagram of a communication scenario to which this application is applicable. As shown in FIG. 5, a terminal device may communicate with both a network device #1 and a network device #2. The network device #2 has both an uplink transmission function and a downlink transmission function, and the network device #1 has only an uplink transmission function. When the terminal device performs communication via the network device #2, downlink signal quality is good, but uplink signal quality is poor. In this case, the terminal device may further establish a connection to the network device #1, and perform joint uplink transmission based on TRP#1 and TRP#2, that is, the terminal device may transmit an uplink signal to the network device #1 and the network device #2, to improve uplink transmission performance of the terminal device. The terminal device transmitting the uplink signal to the network device #1 and the network device #2 may be referred to as uplink multi-TRP transmission. The uplink multi-TRP transmission includes one or more of the following transmission modes. Unless otherwise specified, the method in this application is applicable to a scenario corresponding to any one of the following modes.

Mode 1: The terminal device transmits same data to two network devices at different times, and a network side combines same data signals received by the network device #1 and the network device #2, to improve signal strength of the data.

Mode 2: The terminal device transmits same data to two network devices at a same time, and a network side combines same data signals received by the network device #1 and the network device #2, to improve signal strength of the data.

Mode 3: The terminal device transmits different data or different data streams of same data to two network devices at a same time, to increase an amount of uplink transmission data and improve uplink transmission performance.

In free space, strength of an electromagnetic wave decreases as a propagation distance increases. A loss generated when the electromagnetic wave propagates in free space is referred to as a path loss. When an electromagnetic wave signal transmitted by a transmitter propagates through a radio channel, due to impact of a path loss, signal strength of the electromagnetic wave signal decreases upon reaching a receiver. Therefore, when the receiver is far away, the transmitter needs to appropriately adjust a signal transmit power to compensate for the impact caused by the path loss. In mobile communication systems, because the transmit power of terminal devices is generally lower than the transmit power of network devices, the signal strength of uplink transmission is generally lower than the signal strength of downlink transmission. Consequently, the terminal devices have good downlink transmission performance but poor uplink transmission performance.

To resolve this problem, a solution is, as shown in FIG. 5, to deploy some low-cost network devices that have only an uplink transmission function. If such a network device is present near a terminal device, the terminal device can perform uplink transmission via the network device, thereby improving uplink transmission performance. The network device can perform only uplink transmission and cannot perform downlink transmission, that is, the network device does not send downlink reference signals. Therefore, according to the existing solution, the terminal device cannot estimate a path loss for uplink transmission between the terminal device and the network device. Consequently, the terminal device cannot determine an uplink transmit power to the network device, which affects uplink transmission performance.

In view of this, in this application, it is first proposed that a first path loss reference may be used to determine at least two path losses. For example, the terminal device may use a first path loss reference signal between the terminal device and the network device #2 as a path loss reference signal for uplink transmission between the terminal device and the network device #1. For example, the first path loss reference signal may be a downlink path loss reference signal between the terminal device and the network device #2 shown in FIG. 5. For example, the first path loss reference signal may be a downlink path loss reference signal sent by the network device #2 to the terminal device. For example, the downlink path loss reference signal may be an SSB. For another example, the downlink path loss reference signal may be a CSI-RS. For another example, the first path loss reference signal is an uplink reference signal between the terminal device and the network device. In this case, the first path loss reference signal may be used to determine at least two path losses, for example, PL#1 (an example of a first path loss) and PL#2 (an example of the first path loss). PL#1 may be a path loss for uplink transmission between the terminal device and the network device #1, and PL#2 (an example of a second path loss) may be a path loss for uplink transmission between the terminal device and the network device #2. It should be noted that PL#2 may be directly calculated in the foregoing path loss calculation manner based on a power at which the network device #2 sends the first path loss reference signal and a power at which the terminal device receives the first path loss reference signal.

It can be learned from the foregoing descriptions that the first path loss reference signal may be used to determine at least two path losses. In a specific uplink transmission, the terminal device needs to determine a path loss that should be used of the at least two path losses, so as to determine a transmit power for the current uplink transmission, thereby ensuring uplink transmission performance.

Further, this application provides a method for determining a path loss. The terminal device may receive first information from the network device. Because the first information indicates a first path loss among at least two path losses, and the at least two path losses are determined based on a first path loss reference signal, the terminal device may determine the first path loss based on the received first information and the first path loss reference signal. The first path loss may be used for uplink transmission. Based on the method, the terminal device may determine, from at least two path losses, a path loss used for the current uplink transmission, thereby ensuring uplink transmission performance.

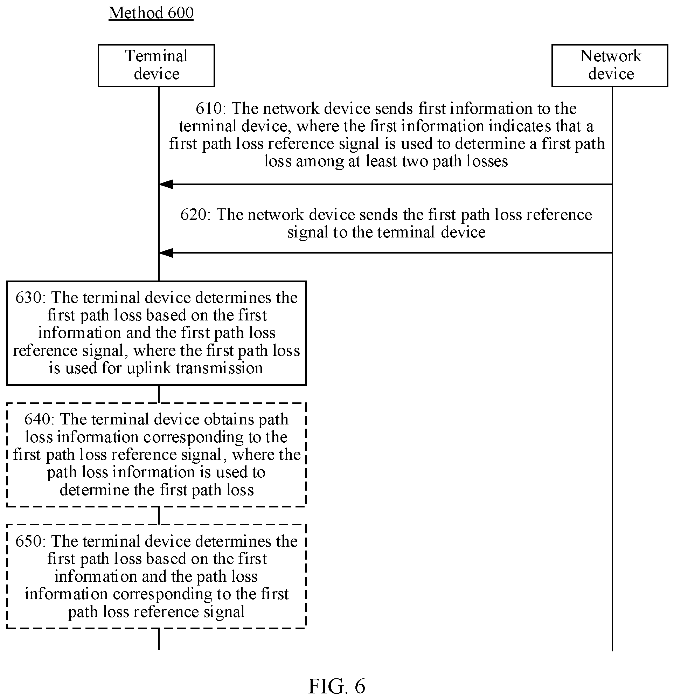

FIG. 6 is a schematic flowchart of a method 600 for determining a path loss according to this application. As shown in FIG. 6, the method includes the following steps.

610: A network device sends first information, where the first information indicates that a first path loss reference signal is used to determine a first path loss among at least two path losses.

Correspondingly, a terminal device receives the first information.

In a possible scenario, "the first information indicates that a first path loss reference signal is used to determine a first path loss among at least two path losses" may also be understood as the first information indicating that the first path loss reference signal is used to determine any one of the at least two path losses. For example, the first path loss reference signal may be used to determine two path losses, that is, the first information indicates whether the first path loss reference signal is used to determine PL#1 or PL#2 of the two path losses.

In another possible scenario, "the first information indicates that a first path loss reference signal is used to determine a first path loss among at least two path losses" may also be understood as follows: The first information indicates whether the first path loss is obtained by adding a path loss adjustment amount to a second path loss determined based on the first path loss reference signal. Specifically, for a manner of determining the second path loss based on the first path loss reference signal, refer to the foregoing formula "PL = referenceSignalPower - higher layer filtered RSRP". "referenceSignalPower" may be understood as a power configured by the network device for sending the first path loss reference signal. "higher layer filtered RSRP" may be understood as a power at which the terminal receives the first path loss reference signal, which is filtered by a higher layer. A difference between the two powers is the path loss PL#2. The path loss adjustment amount is a difference between the first path loss PL#1 and the second path loss PL#2. For example, path loss adjustment amount = PL#1 - PL#2, or path loss adjustment amount = PL#2 - PL#1.

In this application, a path loss corresponding to the uplink transmission for which the first path loss reference signal is used is PL#1 of the at least two path losses, or the path loss corresponding to the uplink transmission needs addition of the path loss adjustment amount to PL#2 determined based on the first path loss reference signal.

In this application, step 610 may be specifically implemented in a plurality of implementations, and each implementation is described below.

### Implementation 1

The first information includes an association relationship between a TCI state corresponding to uplink transmission and a first path loss compensation factor of at least two path loss compensation factors, where the TCI state corresponds to the first path loss reference signal, the at least two path loss compensation factors are in one-to-one correspondence with the at least two path losses, and the first path loss compensation factor corresponds to the first path loss.

For example, the first information may be RRC signaling, DCI signaling, MAC CE signaling, or the like. This is not limited.

The "TCI state" mentioned in this application may be any one or a combination of the DLorjointTCI state, the UL TCI state, or the spatial relation described above.

In Implementation 1, the network device may configure two path loss compensation factors alpha for the terminal device, and configure an association relationship between the TCI state and one of the at least two alphas. It may be understood that the two alphas may be two path loss compensation factors corresponding to a path loss reference signal associated with the TCI state, the two alphas respectively correspond to two alpha indexes, and an association relationship between the TCI state and an index corresponding to one of the at least two alphas may be configured.

In a possible scenario, it is assumed that the network device configures, for the terminal device, an association relationship between the TCI state and a first alpha of the at least two alphas. For example, the terminal device determines, based on the first alpha associated with the TCI state for the uplink transmission, that the first path loss reference signal associated with the TCI state is used to determine PL#1, or the terminal device may determine that the path loss adjustment amount needs to be added to PL#2 determined based on the first path loss reference signal. For example, a path loss corresponding to the uplink transmission for which the TCI state is used is PL#1 of the at least two path losses, or the path loss corresponding to the uplink transmission needs addition of the path loss adjustment amount to PL#2 determined based on the first path loss reference signal. In this scenario, it is assumed that the network device configures an association relationship between the TCI state and a second alpha of the at least two alphas. For example, the terminal device determines, based on the second alpha associated with the TCI state for the uplink transmission, that the first path loss reference signal associated with the TCI state is used to determine PL#2, or the terminal device may determine that the path loss adjustment amount does not need to be added to PL#2 determined based on the first path loss reference signal. For example, a path loss corresponding to the uplink transmission for which the TCI state is used is PL#2 of the at least two path losses, or the path loss corresponding to the uplink transmission does not need the addition of the path loss adjustment amount to PL#2 determined based on the first path loss reference signal.

In another possible scenario, it is assumed that the network device configures an association relationship between the TCI state and a second alpha of the at least two alphas. The terminal device determines, based on the second alpha associated with the TCI state for the uplink transmission, that the first path loss reference signal associated with the TCI state is used to determine PL#1, or the terminal device may determine that the path loss adjustment amount needs to be added to PL#2 determined based on the first path loss reference signal. In this scenario, it is assumed that the network device configures an association relationship between the TCI state and a first alpha of the at least two alphas. For example, the terminal device determines, based on the first alpha associated with the TCI state for the uplink transmission, that the first path loss reference signal associated with the TCI state is used to determine PL#2, or the terminal device may determine that the path loss adjustment amount does not need to be added to PL#2 determined based on the first path loss reference signal.

Further, in Implementation 1, in a possible implementation, the network device may not only configure, for the terminal device, the association relationship between the TCI state and one of the at least two alphas, but also dynamically adjust a value of the first alpha and a value of the second alpha. For example, the network device may send indication signaling to the terminal device, where the indication signaling indicates the value of the first alpha and the value of the second alpha, and the terminal device may determine, based on the received indication signaling, the value of the corresponding alpha. For example, when subsequently determining a transmit power according to Formula (1) to Formula (3), the terminal device determines PL#2 based on the first path loss reference signal associated with the TCI state. However, the path loss compensation factor in Formula (1) to Formula (3) is determined based on a value configured by the network device. It may also be understood as follows: In this implementation, a value corresponding to the loss compensation factor may dynamically change. In addition, in this implementation, PL#1 and PL#2 are the same, or both PL#1 and PL#2 are estimated based on the first path loss reference signal, or PL#1 does not need the addition of the path loss adjustment amount to PL#2. In other words, PL#1 and PL#2 are the same.

For example, the network device may dynamically adjust the value of the first alpha (for example, alpha#0) or the value of the second alpha (for example, alpha#1) via indication signaling, where the indication signaling may include indexes of one or more downlink reference signals, and the value of the first alpha and/or the value of the second alpha corresponding to each downlink reference signal. It should be noted that the one or more downlink reference signals include the first downlink path loss reference signal.

For example, the network device may dynamically adjust the value of the first alpha (for example, alpha#0) or the value of the second alpha (for example, alpha#1) via indication signaling, where the indication signaling may include indexes of one or more TCI states, and the value of the first alpha and/or the value of the second alpha corresponding to each TCI state. It should be noted that path loss reference signals associated with the one or more TCI states include the first downlink path loss reference signal. For example, the "indication signaling" may be RRC signaling, DCI signaling, MAC CE signaling, or the like. This is not limited.

Table 1 shows an association relationship between alpha corresponding to each downlink reference signal and an alpha value. In Table 1, alpha#0 and alpha#1 are indexes corresponding to alpha. As shown in Table 1, downlink reference signals include SSB#0, CSI-RS#0, and CSI-RS #1, and each downlink reference signal corresponds to two alphas (corresponding to different indexes) and values corresponding to the two alphas.

For example, it is assumed that the first path loss reference signal corresponding to the TCI state is CSI-RS#1, and it is assumed that the network device configures, for the terminal device, the association relationship between the TCI state and the first alpha (for example, an index of the first alpha is alpha#0) of the at least two alphas. For example, based on alpha#0 associated with the TCI state for the uplink transmission and the first path loss reference signal, the terminal device may first estimate the path loss PL#2 (namely, PL#1). Specifically, when the transmit power for the uplink transmission is determined according to Formula (1) to Formula (3), the "path loss compensation factor" is the alpha value of alpha#0 corresponding to CSI-RS#1 in Table 1. In this scenario, it is assumed that the network device configures the association relationship between the TCI state and the second alpha (for example, an index of the second alpha is alpha#1) of the at least two alphas. For example, based on alpha#1 associated with the TCI state for the uplink transmission and the first path loss reference signal, the terminal device may first estimate the path loss PL#2 (namely, PL#1). Specifically, when the transmit power for the uplink transmission is determined according to Formula (1) to Formula (3), the "path loss compensation factor" is the alpha value of alpha#1 corresponding to CSI-RS#1 in Table 1.

**Table 1**

| | | |
|---|---|---|
| SSB#0 | alpha#0 | alpha value |
| | alpha#1 | alpha value |
| CSI-RS#0 | alpha#0 | alpha value |
| | alpha#1 | alpha value |
| CSI-RS#1 | alpha#0 | alpha value |
| | alpha#1 | alpha value |

Optionally, the indication signaling may further include a field indicating whether the indication signaling includes a value of a first alpha or a value of a second alpha corresponding to a downlink reference signal. It is assumed that the "field" may be a field #A. When a value of the field #A is "0", it may indicate that the indication signaling does not include a value of a second alpha corresponding to a downlink reference signal. When a value of the field #A is "1", it may indicate that the indication signaling includes a value of a second alpha corresponding to the downlink reference signal.

For example, the index of the downlink reference signal in the foregoing table may also be an index of the TCI state, and the terminal device determines, based on an alpha index associated with the TCI state for the uplink transmission, whether to use PL#1 or PL#2.

### Implementation 2

The first information is at least one of the following: configuration information of a TCI state for uplink transmission, configuration information of a path loss reference signal, configuration information of a path loss compensation factor for uplink transmission, and configuration information of an uplink power control parameter for uplink transmission. In this case, it may also be understood as follows: The configuration information of the TCI state for the uplink transmission, the configuration information of the path loss reference signal, the configuration information of the path loss compensation factor for the uplink transmission, or the configuration information of the uplink power control parameter for the uplink transmission may indicate that the first path loss reference signal is used to determine the first path loss among the at least two path losses, or indicate whether the path loss adjustment amount needs to be added to the second path loss determined based on the first path loss reference signal.

In a possible implementation, for example, the network device may include a field (for example, a field #1) in the configuration information of the TCI state, the configuration information of the path loss reference signal, the configuration information of the path loss compensation factor, configuration information of Uplink-powerControl, or configuration information of an AlphaSet. The field indicates that the first path loss reference signal is used to determine the first path loss among the at least two path losses, or the field indicates whether the path loss adjustment amount is added to the second path loss determined based on the first path loss reference signal. The following describes this implementation in detail.

For example, a field #1 may be included in the configuration information of the TCI state. It is assumed that, when the field is "True", it indicates that if the TCI state is used for the uplink transmission, the first path loss reference signal corresponding to the TCI state is used to determine PL#1 of the at least two path losses, or the path loss adjustment amount needs to be added to PL#2 determined based on the first path loss reference signal. Alternatively, when the field is "False", it indicates that if the TCI state is used for the uplink transmission, the first path loss reference signal corresponding to the TCI state is used to determine PL#1 of the at least two path losses, or the path loss adjustment amount needs to be added to PL#2 determined based on the first path loss reference signal. For example, a path loss corresponding to the uplink transmission for which the TCI state is used is PL#1 of the at least two path losses, or the path loss corresponding to the uplink transmission needs addition of the path loss adjustment amount to PL#2 determined based on the first path loss reference signal.

For example, a field #1 may be included in the configuration information of the path loss reference signal. It is assumed that, when the field is "True", it indicates that if the reference signal is used as the first path loss reference signal for the uplink transmission, the first path loss reference signal is used to determine PL#1 of the at least two path losses, or the path loss adjustment amount needs to be added to PL#2 determined based on the first path loss reference signal. Alternatively, when a value of the field is "False", it indicates that if the reference signal is used as the PL#1 reference signal for the uplink transmission, the first path loss reference signal is used to determine the first path loss among the at least two path losses, or the path loss adjustment amount needs to be added to PL#2 determined based on the first path loss reference signal. For example, a path loss corresponding to the uplink transmission using the first path loss reference signal is PL#1 of the at least two path losses, or the path loss corresponding to the uplink transmission needs addition of the path loss adjustment amount to PL#2 determined based on the first path loss reference signal.

For example, a field #1 may be included in the configuration information of the AlphaSet. It is assumed that, when the field is "True", it indicates that if a transmit power parameter of the uplink transmission is determined based on alpha, a path loss corresponding to the uplink transmission is PL#1 of the at least two path losses, or the path loss adjustment amount needs to be added to PL#2 determined based on the first path loss reference signal. Alternatively, when the field is "False", it indicates that if a transmit power parameter of the uplink transmission is determined based on alpha, a path loss corresponding to the uplink transmission is PL#1 of the at least two path losses, or the path loss adjustment amount needs to be added to PL#2 determined based on the first path loss reference signal. For example, a path loss corresponding to the uplink transmission associated with the AlphaSet is PL#1 of the at least two path losses, or the path loss corresponding to the uplink transmission needs addition of the path loss adjustment amount to PL#2 determined based on the first path loss reference signal.

For example, a field #1 may be included in the configuration information of Uplink-powerControl. It is assumed that, when the field is "True", it indicates that if a transmit power parameter of the uplink transmission is determined based on Uplink-powerControl, a path loss corresponding to the uplink transmission is PL#1 of the at least two path losses, or the path loss adjustment amount needs to be added to PL#2 determined based on the first path loss reference signal. Alternatively, when a value of the field is "False", it indicates that if a transmit power parameter of the uplink transmission is determined based on Uplink-powerControl, a path loss corresponding to the uplink transmission is PL#1 of the at least two path losses, or the path loss adjustment amount needs to be added to PL#2 determined based on the first path loss reference signal. For example, a path loss corresponding to the uplink transmission associated with Uplink-powerControl is PL#1 of the at least two path losses, or the path loss corresponding to the uplink transmission needs addition of the path loss adjustment amount to PL#2 determined based on the first path loss reference signal.

In another possible implementation, for example, depending on whether the field #1 is included in the configuration information of the TCI state, the configuration information of the path loss reference signal, the configuration information of the path loss compensation factor, the configuration information of Uplink-powerControl, or the configuration information of the AlphaSet, the network device may indicate, to the terminal device, a path loss (namely, PL#1 or PL#2) of the at least two path losses that is determined based on the first path loss reference signal, or whether the path loss adjustment amount needs to be added to PL#2 determined based on the first path loss reference signal. For example, if the field #1 is not included in the configuration information of the TCI state, the configuration information of the path loss reference signal, the configuration information of the path loss compensation factor, the configuration information of Uplink-powerControl, or the configuration information of the AlphaSet, it indicates to the terminal device that the first path loss reference signal is used to determine PL#1 of the at least two path losses, or the path loss adjustment amount needs to be added to PL#2 determined based on the first path loss reference signal. For another example, if the field #1 is included in the configuration information of the TCI state, the configuration information of the path loss reference signal, the configuration information of the path loss compensation factor, or the configuration information of Uplink-powerControl, it indicates to the terminal device that the first path loss reference signal is used to determine PL#1 of the at least two path losses, or the path loss adjustment amount needs to be added to PL#2 determined based on the first path loss reference signal.

In still another possible implementation, for example, the network device may include a field (for example, the field #1) in the configuration information of the TCI state, the configuration information of the path loss reference signal, the configuration information of the path loss compensation factor, the configuration information of Uplink-powerControl, or the configuration information of the AlphaSet. The field indicates a path loss index corresponding to the first path loss among the at least two path losses corresponding to the first path loss reference signal.

For example, a field #1 may be included in the configuration information of the TCI state. The field #1 indicates that if the TCI state is used for the uplink transmission, it may be determined, based on a path loss index associated with the field #1, whether PL#1 or PL#2 is used, or whether the path loss adjustment amount needs to be added to PL#2 determined based on the first path loss reference signal. For example, if the path loss index associated with the field #1 is index#1, the path loss corresponding to the uplink transmission is PL#1 of the at least two path losses, or the path loss adjustment amount needs to be added to PL#2 determined based on the first path loss reference signal. In this scenario, if the path loss index associated with the field #1 is index#2, the path loss corresponding to the uplink transmission is PL#2 of the at least two path losses, or the path loss adjustment amount does not need to be added to PL#2 determined based on the first path loss reference signal. For another example, if the path loss index associated with the field #1 is index#1, the path loss corresponding to the uplink transmission is PL#2 of the at least two path losses, or the path loss adjustment amount does not need to be added to PL#2 determined based on the first path loss reference signal. In this scenario, if the path loss index associated with the field #1 is index#2, the path loss corresponding to the uplink transmission is PL#1 of the at least two path losses, or the path loss adjustment amount needs to be added to PL#2 determined based on the first path loss reference signal.

For example, a field #1 may be included in the configuration information of the path loss reference signal. The field #1 indicates that if the path loss reference signal is used as the first path loss reference signal for the uplink transmission, it may be determined, based on a path loss index associated with the field #1, whether PL#1 or PL#2 is used, or whether the path loss adjustment amount needs to be added to PL#2 determined based on the first path loss reference signal. For example, if the path loss index associated with the field #1 is index#1, the path loss corresponding to the uplink transmission is PL#1 of the at least two path losses, or the path loss adjustment amount needs to be added to PL#2 determined based on the first path loss reference signal. In this scenario, if the path loss index associated with the field #1 is index#2, the path loss corresponding to the uplink transmission is PL#2 of the at least two path losses, or the path loss adjustment amount does not need to be added to PL#2 determined based on the first path loss reference signal. For another example, if the path loss index associated with the field #1 is index#1, the path loss corresponding to the uplink transmission is PL#2 of the at least two path losses, or the path loss adjustment amount does not need to be added to PL#2 determined based on the first path loss reference signal. In this scenario, if the path loss index associated with the field #1 is index#2, the path loss corresponding to the uplink transmission is PL#1 of the at least two path losses, or the path loss adjustment amount needs to be added to PL#2 determined based on the first path loss reference signal.

For implementations of the foregoing remaining configuration information, refer to the foregoing two examples for understanding. Details are not described again.

### Implementation 3

The first information may be associated with a TCI state, or the first information may be associated with a path loss reference signal, a path loss compensation factor, Uplink-powerControl, or an AlphaSet. For example, the first information may be in a form of a "field". For example, the first information may be a field #2.

For example, the TCI state is associated with the field #2. After determining the TCI state of the current uplink transmission, the terminal device may further determine a value of the "field #2" associated with the TCI state. It is assumed that, when the value of the field is "0", it indicates that if the TCI state is used for the uplink transmission, the first path loss reference signal corresponding to the TCI state is used to determine PL#1 of the at least two path losses, or the path loss adjustment amount needs to be added to PL#2 determined based on the first path loss reference signal. Alternatively, when the field is "False", it indicates that if the TCI state is used for the uplink transmission, the first path loss reference signal corresponding to the TCI state is used to determine PL#1 of the at least two path losses, or the path loss adjustment amount needs to be added to PL#2 determined based on the first path loss reference signal. For example, a path loss corresponding to the uplink transmission for which the TCI state is used is PL#1 of the at least two path losses, or the path loss corresponding to the uplink transmission needs addition of the path loss adjustment amount to PL#2 determined based on the first path loss reference signal.

Similarly, for a specific implementation in which the path loss reference signal, the path loss compensation factor, Uplink-powerControl, or the AlphaSet is associated with the field #2, refer to the foregoing implementation in which the TCI state is associated with the field #2. Details are not described again.

### Implementation 4

The first information is at least one of the following: MAC CE activation signaling for a TCI state for uplink transmission, DCI indication signaling for a TCI state for uplink transmission, scheduling signaling for scheduled uplink transmission, or configuration information for grant-free uplink transmission. In this case, it may also be understood as follows: The MAC CE activation signaling for the TCI state for the uplink transmission, the scheduling signaling for the scheduled uplink transmission, or the configuration information for the grant-free uplink transmission may indicate that the first path loss reference signal is used to determine the first path loss among the at least two path losses, or indicate whether the path loss adjustment amount needs to be added to the second path loss determined based on the first path loss reference signal.

As described above, when determining the TCI state for the uplink transmission, the terminal device usually needs to go through three phases: configuration of the TCI state, activation of the TCI state, and indication of the TCI state. Therefore, in a possible implementation, a field (for example, a field #1) may be included in the MAC CE activation signaling for the TCI state or the DCI indication signaling for the TCI state. The field indicates that the first path loss reference signal is used to determine the first path loss among the at least two path losses, or the field indicates whether the path loss adjustment amount needs to be added to the second path loss determined based on the first path loss reference signal.

For example, a field #1 may be included in the MAC CE activation signaling for the TCI state for the uplink transmission or the DCI indication signaling for the TCI state for the uplink transmission. It is assumed that the field is 1 bit, and when a value of the field is "0", it indicates that if the TCI state for the uplink transmission is a TCI state in the MAC CE activation signaling or a TCI state in the DCI indication signaling, the first path loss reference signal corresponding to the TCI state is used to determine PL#1 of the at least two path losses, or the path loss adjustment amount needs to be added to PL#2 determined based on the first path loss reference signal. Alternatively, when the value of the field is "1", it indicates that if the TCI state is used for the uplink transmission, the first path loss reference signal corresponding to the TCI state is used to determine PL#1 of the at least two path losses, or the path loss adjustment amount needs to be added to PL#2 determined based on the first path loss reference signal. For example, a path loss corresponding to the uplink transmission for which the TCI state is used is PL#1 of the at least two path losses, or the path loss corresponding to the uplink transmission needs addition of the path loss adjustment amount to PL#2 determined based on the first path loss reference signal.

For example, in a scenario of dynamically scheduled uplink transmission (namely, uplink transmission scheduled by DCI), scheduling signaling (namely, DCI for scheduling uplink transmission) may include a field #1. The uplink transmission scheduled by the DCI may be PUSCH transmission scheduled by the DCI, Type 2 configured grant (configured grant, CG) PUSCH transmission or retransmission activated by the DCI, Type 1 CG PUSCH retransmission scheduled by the DCI, SRS transmission activated by the DCI, or the like. The "scheduling signaling" is DCI for scheduling a PUSCH, DCI for activating the Type 2 CG PUSCH transmission or retransmission, DCI for scheduling the Type 1 PUSCH retransmission, DCI for scheduling the SRS transmission, or DCI for scheduling a PRACH. It is assumed that the scheduling request signaling includes a field #1, and it is assumed that, when a value of the field is "0", it indicates that the first path loss reference signal corresponding to the current uplink transmission is used to determine PL#1 of the at least two path losses, or the path loss adjustment amount needs to be added to PL#2 determined based on the first path loss reference signal. In this scenario, when the value of the field is "1", it indicates that the first path loss reference signal corresponding to the current uplink transmission is used to determine PL#2 of the at least two path losses, or the path loss adjustment amount does not need to be added to PL#2 determined based on the first path loss reference signal. Alternatively, when the value of the field is "1", it indicates that the first path loss reference signal corresponding to the current uplink transmission is used to determine PL#1 of the at least two path losses, or the path loss adjustment amount needs to be added to PL#2 determined based on the first path loss reference signal. For example, a path loss corresponding to uplink transmission scheduled by the DCI is PL#1 of the at least two path losses, or the path loss corresponding to the uplink transmission needs addition of the path loss adjustment amount to PL#2 determined based on the first path loss reference signal. In this scenario, when the value of the field is "0", it indicates that the first path loss reference signal corresponding to the current uplink transmission is used to determine PL#2 of the at least two path losses, or the path loss adjustment amount does not need to be added to PL#2 determined based on the first path loss reference signal. For example, a path loss corresponding to uplink transmission scheduled by the DCI is PL#2 of the at least two path losses, or the path loss adjustment amount does not need to be added to PL#2 determined based on the first path loss reference signal.

For example, a field #1 may be included in the configuration information for the grant-free uplink transmission (for example, a Type 1 PUSCH or a scheduling request). For example, the configuration information of the Type 1 PUSCH includes a field #1, or is associated with the field #1. It is assumed that, when a value of the field is "0", it indicates that the first path loss reference signal corresponding to the current uplink transmission is used to determine PL#1 of the at least two path losses, or the path loss adjustment amount needs to be added to PL#2 determined based on the first path loss reference signal. Alternatively, when the value of the field is "1", it indicates that the first path loss reference signal corresponding to the current uplink transmission is used to determine PL#1 of the at least two path losses, or the path loss adjustment amount needs to be added to PL#2 determined based on the first path loss reference signal. For example, a path loss corresponding to the Type 1 PUSCH transmission is PL#1 of the at least two path losses, or the path loss corresponding to the uplink transmission needs addition of the path loss adjustment amount to PL#2 determined based on the first path loss reference signal.

### Implementation 5

In a possible implementation, the first information includes an association relationship between second downlink control information and a first control resource set pool index, where the first control resource set pool index is used to determine the first path loss among the at least two path losses. Specifically, the network device may configure the association relationship, and some default rules may be predefined in a protocol. For example, the rules may be: when a value of coresetpoolindex corresponding to DCI (an example of the second downlink control information) is a specific value, it indicates that the first path loss reference signal corresponding to the current uplink transmission is used to determine the first path loss among the at least two path losses, or whether the path loss adjustment amount needs to be added to the second path loss determined based on the first path loss reference signal.

For example, the foregoing implementation is applicable to a multi-downlink control information (multi-downlink control information, mDCI) and multi-transmission reception point (multi-transmission reception point, mTRP) scenario in which a PUSCH (an example of the uplink transmission), a PUCCH (another example of the uplink transmission), or an SRS (another example of uplink transmission) is scheduled by DCI (an example of the second downlink control information). When the network device configures control resource set pool index (control resource set pool index, CORESETPoolindex) #0 and CORESETPoolindex#1, or when the network device does not configure CORESETPoolIndex0 but configures only CORESETPoolIndex1, it may be considered that this is the mDCI mTRP scenario.

For example, the rules may be: when a value of coresetpoolindex corresponding to the DCI is 1, it indicates that the first path loss reference signal corresponding to the current uplink transmission (for example, the PUSCH, the PUCCH, or the SRS) is used to determine PL#1 of the at least two path losses, or the path loss adjustment amount needs to be added to PL#2 determined based on the first path loss reference signal. For example, the rules may be: when a value of coresetpoolindex corresponding to the DCI is 0, it indicates that the first path loss reference signal corresponding to the current uplink transmission is used to determine PL#1 of the at least two path losses, or the path loss adjustment amount needs to be added to PL#2 determined based on the first path loss reference signal. For example, a path loss corresponding to uplink transmission scheduled by the DCI is PL#1 of the at least two path losses, or the path loss corresponding to the uplink transmission needs addition of the path loss adjustment amount to PL#2 determined based on the first path loss reference signal.

### Implementation 6

In a possible implementation, the network device may send first indication information to the terminal device, where the first indication information indicates at least two transmission configuration indicator TCI states. Optionally, the first indication information may be DCI indicating the TCI states. The first information includes second indication information (for example, RRC configuration information). The second indication information indicates, from the at least two TCI states, one TCI state or two TCI states for the uplink transmission. The one TCI state or two TCI states for the uplink transmission indicate that the first path loss reference signal is used to determine the first path loss among the at least two path losses, or indicate whether the path loss adjustment amount needs to be added to the second path loss determined based on the first path loss reference signal.

For example, the second indication information indicates that, from the at least two TCI states, the TCI state for the uplink transmission is a first TCI state, where the first TCI state corresponds to PL#1. In this case, the second information indicates that the first path loss reference signal corresponding to the current uplink transmission is used to determine PL#1 of the at least two path losses, or the path loss adjustment amount needs to be added to PL#2 determined based on the first path loss reference signal. For example, a path loss corresponding to the uplink transmission for which the first TCI state is used is PL#1 of the at least two path losses, or the path loss corresponding to the uplink transmission needs addition of the path loss adjustment amount to PL#2 determined based on the first path loss reference signal.

For example, the second indication information indicates that, from the at least two TCI states, the TCI state for the uplink transmission is a second TCI state, where the second TCI state corresponds to PL#1. In this case, the second information indicates that the first path loss reference signal corresponding to the current uplink transmission is used to determine PL#1 of the at least two path losses, or the path loss adjustment amount needs to be added to PL#2 determined based on the first path loss reference signal. For example, a path loss corresponding to the uplink transmission for which the second TCI state is used is PL#1 of the at least two path losses, or the path loss corresponding to the uplink transmission needs addition of the path loss adjustment amount to PL#2 determined based on the first path loss reference signal.

Optionally, the foregoing implementation is applicable to an mDCI mTRP scenario in which a PUSCH (an example of the uplink transmission), a PUCCH (another example of the uplink transmission), or an SRS (another example of the uplink transmission) is scheduled by non-DCI or DCI.

Optionally, the foregoing implementation is further applicable to a single downlink control information (single downlink control information, sDCI) and multi-transmission reception point (multi-transmission reception point, mTRP) scenario in which uplink transmission is a PUCCH, a Type 1 configured grant (configured grant, CG) PUSCH, or an SRS, or is a PUSCH, a PUCCH, or an SRS scheduled by the DCI. It should be understood that, when the network device configures only CORESETPoolindex#0, or the network device does not configure CORESETPoolindex, and each TCI codepoint activated by a MAC CE or a TCI field indicated by the DCI corresponds to a pair of TCI states, it may be considered that this is the sDCI mTRP scenario.

### Implementation 7

In a possible implementation, the first information may include first downlink control information, where the first downlink control information includes a first field (for example, a field #3). A value of the first field indicates that the first path loss reference signal is used to determine the first path loss among the at least two path losses, or a value of the first field indicates whether the path loss adjustment amount needs to be added to the second path loss determined based on the first path loss reference signal. The first downlink control information is used to schedule uplink transmission.

For example, the first field may be a sounding reference signal resource set indicator (SRS resource set indicator) field in DCI. It is assumed that the field is 2 bits, and when a value of the field is "01", it indicates that the first path loss reference signal corresponding to the uplink transmission is used to determine PL#1 of the at least two path losses, or the path loss adjustment amount needs to be added to PL#2 determined based on the first path loss reference signal. When the value of the SRS resource set indicator field is "10", whether the adjustment amount needs to be added may be determined based on a position of a TCI state activated by a MAC CE. This may also be understood as a scenario in which both TCI states are configured or indicated by DCI for uplink transmission. For specific implementation, refer to Implementation 8 described below for understanding.

Optionally, this implementation is applicable to an sDCI mTRP scenario in which a PUSCH (an example of the uplink transmission) is scheduled by DCI (an example of the first downlink control information). For example, a path loss corresponding to uplink transmission scheduled by the DCI is PL#1 of the at least two path losses, or the path loss corresponding to the uplink transmission needs addition of the path loss adjustment amount to PL#2 determined based on the first path loss reference signal.

### Implementation 8

In a possible implementation, a position of a TCI state activated by a MAC CE can be used to determine that the first path loss reference signal is used to determine the first path loss among the at least two path losses, or to indicate whether the path loss adjustment amount needs to be added to the second path loss determined based on the first path loss reference signal.

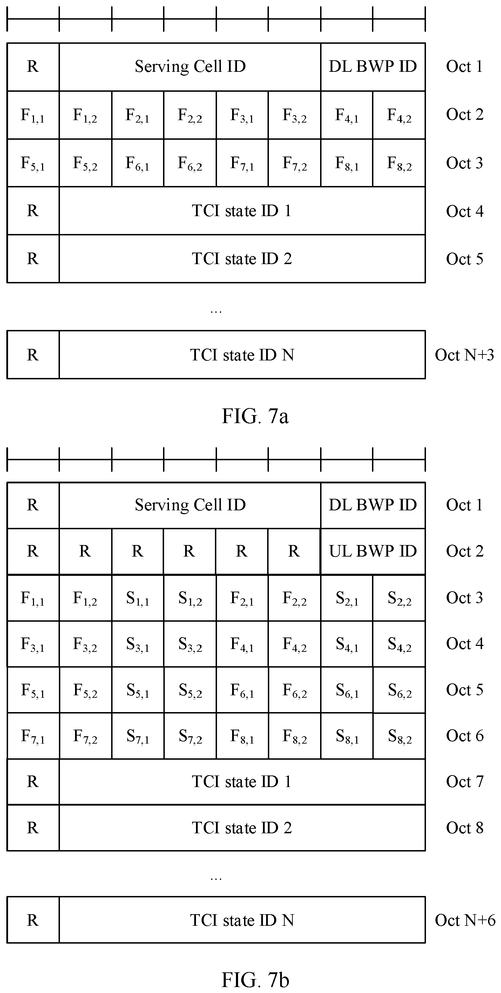

In an implementation, for example, the network device may send first indication information to the terminal device, where the first indication information indicates at least two transmission configuration indicator TCI states. The first information includes second indication information (for example, RRC configuration information). The second indication information indicates that, from the at least two TCI states, a TCI state for uplink transmission is a TCI state corresponding to F_{i,2} in first MAC CE signaling, where the TCI state corresponding to F_{i,2} in the first MAC CE signaling corresponds to the first path loss; or the second indication information indicates that, from the at least two TCI states, the TCI state for the uplink transmission is a TCI state corresponding to F_{i,1} in the first MAC CE signaling, where the TCI state corresponding to F_{i,1} in the first MAC CE signaling corresponds to the first path loss, as shown in FIG. 7a. For example, a path loss corresponding to the uplink transmission for which the TCI state is used is PL#1 of the at least two path losses, or the path loss corresponding to the uplink transmission needs addition of the path loss adjustment amount to PL#2 determined based on the first path loss reference signal.

For example, the first indication information indicates two transmission configuration indicator TCI states, which are respectively used for transmission with two network devices. Generally, when the terminal device is configured in a joint TCI mode in an sDCI mTRP scenario, the two TCI states indicated by the first indication information are respectively used for uplink and downlink transmission with two network devices.

For example, one codepoint (codepoint) of the first MAC CE signaling corresponds to a maximum of two TCI states, and F_{i,1} and F_{i,2} may respectively indicate whether a first and second joint TCI states corresponding to an i^{th} codepoint of the first MAC CE signaling exist. The TCI state corresponding to F_{i,1} that is activated by the first MAC CE signaling is a TCI state used for uplink and downlink transmission with a first network device, and the TCI state corresponding to F_{i,2} is a TCI state used for uplink and downlink transmission with a second network device.

In another implementation, the network device may send first indication information to the terminal device, where the first indication information indicates at least two transmission configuration indicator TCI states. The first information includes second indication information (for example, RRC configuration information). The second indication information indicates that, from the at least two TCI states, a TCI state for uplink transmission is a TCI state corresponding to S_{i,2} in first MAC CE signaling, where the TCI state corresponding to S_{i,2} in the first MAC CE signaling corresponds to the first path loss; or the second indication information indicates that, from the at least two TCI states, the TCI state for the uplink transmission is a TCI state corresponding to S_{i,1} in the first MAC CE signaling, where the TCI state corresponding to S_{i,1} in the first MAC CE signaling corresponds to the first path loss. For example, a path loss corresponding to the uplink transmission for which the TCI state is used is PL#1 of the at least two path losses, or the path loss corresponding to the uplink transmission needs addition of the path loss adjustment amount to PL#2 determined based on the first path loss reference signal.

For example, the first indication information indicates four TCI states (two DL TCI states and two UL TCI states), where two TCI states (one UL TCI state and one DL TCI state) are respectively used for uplink transmission and downlink transmission with a first network device, and the other two TCI states (one UL TCI state and one DL TCI state) are respectively used for uplink transmission and downlink transmission with a second network device. Generally, when the terminal device is configured in a separate TCI mode in an sDCI mTRP scenario, the four TCI states indicated by the first indication information are used for uplink and downlink transmission with two network devices.

For example, one codepoint (codepoint) of the first MAC CE signaling corresponds to a maximum of four TCI states, F_{i,1} and F_{i,2} may respectively indicate whether a first and second DL TCI states corresponding to an i^{th} codepoint of the first MAC CE signaling exist, and S_{i,1} and S_{i,2} may respectively indicate whether a first and second UL TCI states corresponding to the i^{th} codepoint of the first MAC CE signaling exist. The UL TCI state corresponding to S_{i,1} that is activated by the first MAC CE signaling is a TCI state for uplink transmission to the first network device, and the UL TCI state corresponding to S_{i,2} is a TCI state for uplink transmission to the second network device, as shown in FIG. 7b.

For example, the foregoing implementation is applicable to the sDCI mTRP scenario in which both TCI states are configured or indicated by DCI for uplink transmission.

It should be understood that, in Implementation 6 to Implementation 8, the network device may first send the first MAC CE signaling to the terminal device, where the first MAC CE signaling is used to activate at least one TCI state, and the at least one activated TCI state includes the TCI state for the uplink transmission of the terminal device in Implementation 6 to Implementation 8. For example, the at least one activated TCI state includes the first TCI state for the uplink transmission of the terminal device, or the at least one activated TCI state includes the second TCI state for the uplink transmission of the terminal device.

### Implementation 9

The first information includes an association relationship between a TCI state and a timing advance group (timing advance group, TAG), or the first information includes an association relationship between a TCI state and a timing advance (timing advance, TA). Specifically, the network device may configure two TAGs for the terminal device, and configure the TCI state to be associated with one of the two TAGs. Alternatively, the network device may configure two TAs for the terminal device, and configure the TCI state to be associated with one of the two TAs. The terminal device determines, based on the association relationship between the TCI state and the TAG or the TA, a path loss of the at least two path losses that is determined based on the first path loss reference signal and that is used for uplink transmission using the TCI state, where the first path loss reference signal is associated with the TCI state.

For example, if the TCI state is associated with a first TAG of the two TAGs, a path loss corresponding to the uplink transmission using the TCI state is PL#1 of the at least two path losses, or the path loss corresponding to the uplink transmission needs addition of the path loss adjustment amount to PL#2 determined based on the first path loss reference signal. If the TCI state is associated with a second TAG of the two TAGs, the path loss corresponding to the uplink transmission using the TCI state is PL#2 of the at least two path losses, or the path loss corresponding to the uplink transmission does not need the addition of the path loss adjustment amount to PL#2 determined based on the first path loss reference signal. For another example, if the TCI state is associated with the first TAG of the two TAGs, the path loss corresponding to the uplink transmission using the TCI state is PL#2 of the at least two path losses, or the path loss corresponding to the uplink transmission does not need the addition of the path loss adjustment amount to PL#2 determined based on the first path loss reference signal. If the TCI state is associated with the second TAG of the two TAGs, the path loss corresponding to the uplink transmission using the TCI state is PL#1 of the at least two path losses, or the path loss corresponding to the uplink transmission needs addition of the path loss adjustment amount to PL#2 determined based on the first path loss reference signal. Conversely, for example, if the TCI state is associated with a first TA of the two TAs, the path loss corresponding to the uplink transmission using the TCI state is PL#1 of the at least two path losses, or the path loss corresponding to the uplink transmission needs addition of the path loss adjustment amount to PL#2 determined based on the first path loss reference signal. If the TCI state is associated with a second TA of the two TAs, the path loss corresponding to the uplink transmission using the TCI state is PL#2 of the at least two path losses, or the path loss corresponding to the uplink transmission does not need the addition of the path loss adjustment amount to PL#2 determined based on the first path loss reference signal. For another example, if the TCI state is associated with the first TA of the two TAs, the path loss corresponding to the uplink transmission using the TCI state is PL#2 of the at least two path losses, or the path loss corresponding to the uplink transmission does not need the addition of the path loss adjustment amount to PL#2 determined based on the first path loss reference signal. If the TCI state is associated with the second TA of the two TAs, the path loss corresponding to the uplink transmission using the TCI state is PL#1 of the at least two path losses, or the path loss corresponding to the uplink transmission needs addition of the path loss adjustment amount to PL#2 determined based on the first path loss reference signal.

In other words, an example in which the network device configures two TAGs for the terminal device is used. The terminal device determines, based on whether a first TAG or a second TAG of the two TAGs is used for uplink transmission, a path loss of the at least two path losses to use. For example, the terminal device determines that the path loss reference signal for the uplink transmission is the first path loss reference signal. If the TAG for the uplink transmission is the first TAG of the two TAGs, a path loss corresponding to the uplink transmission is PL#1 of the at least two path losses, or the path loss corresponding to the uplink transmission needs addition of the path loss adjustment amount to PL#2 determined based on the first path loss reference signal. If the TAG for the uplink transmission is the second TAG of the two TAGs, a path loss corresponding to the uplink transmission is PL#2 of the at least two path losses, or the path loss corresponding to the uplink transmission does not need the addition of the path loss adjustment amount to PL#2 determined based on the first path loss reference signal. Conversely, for example, the terminal device determines that the path loss reference signal for the uplink transmission is the first path loss reference signal. If the TAG for the uplink transmission is the first TAG of the two TAGs, a path loss corresponding to the uplink transmission is PL#2 of the at least two path losses, or the path loss corresponding to the uplink transmission does not need the addition of the path loss adjustment amount to PL#2 determined based on the first path loss reference signal. If the TAG for the uplink transmission is the second TAG of the two TAGs, a path loss corresponding to the uplink transmission is PL#1 of the at least two path losses, or the path loss corresponding to the uplink transmission needs addition of the path loss adjustment amount to PL#2 determined based on the first path loss reference signal.

When the network device configures two TAs for the terminal device, an implementation may be understood with reference to the foregoing implementation, and no further examples are provided.

620: The network device sends the first path loss reference signal.

Correspondingly, the terminal device receives the first path loss reference signal.

It should be noted that a sequence of performing step 610 and step 620 is not limited in this application.

For example, the network device may send a downlink reference signal to the terminal device, where the downlink reference signal may be an SSB or a CSI-RS. In this case, the downlink reference signal may be the first path loss reference signal, and the first path loss reference signal is used for uplink transmission of the terminal device.

In a possible implementation, the network device may further send, to the terminal device, path loss information corresponding to the first path loss reference signal, where the path loss information is used by the terminal device to determine the first path loss.

For example, the path loss information may include at least one of the following: the path loss adjustment amount, a value corresponding to the first path loss, a power difference, and a power at which the network device receives a third uplink reference signal. The path loss adjustment amount indicates the difference between the first path loss and the second path loss.

The power difference indicates a difference between a power at which the network device receives a first uplink reference signal and a power at which the network device receives a second uplink reference signal. Therefore, the terminal device may specifically determine, based on the path loss information, the value corresponding to the first path loss.

630: The terminal device determines the first path loss based on the first information and the first path loss reference signal, where the first path loss is used for uplink transmission.

In this application, the terminal device may determine, based on the first information, that the first path loss is used for the current uplink transmission. In this case, the terminal device may specifically determine, based on the received first reference signal, the value of the first path loss.

In this application, when the terminal device determines, based on the received first information, to use PL#1 (which may also be understood as the first path loss being PL#1), optionally, the method further includes 640, in which the terminal device obtains the path loss information corresponding to the first path loss reference signal, where the path loss information is used to determine the first path loss.

For example, the path loss information may include at least one of the following: the path loss adjustment amount, the value corresponding to the first path loss, the power difference, and the power at which the network device receives the third uplink reference signal. The path loss adjustment amount indicates the difference between the first path loss and the second path loss.

The power difference indicates the difference between the power at which the network device receives the first uplink reference signal and the power at which the network device receives the second uplink reference signal. Therefore, the terminal device may specifically determine, based on the path loss information, the value corresponding to the first path loss.

In a possible implementation, the path loss information corresponding to the first path loss reference signal may be sent by the network device. For example, the network device may send an association relationship between the first path loss reference signal and the path loss information. The association relationship may be configured via RRC signaling, or may be sent via MAC CE signaling or DCI signaling. The signaling may be carried on a physical downlink shared channel (physical downlink shared channel, PDSCH) or a PDCCH. The signaling may carry indexes of one or more first downlink reference signals (for example, an SSB index and a CSI-RS index) and one or more pieces of path loss information, where the indexes of the first downlink reference signals are in one-to-one correspondence with the path loss information. In this application, the first downlink reference signal may be understood as the first path loss reference signal.

In a possible implementation, the path loss information corresponding to the first path loss reference signal may be sent by the network device. For example, the network device may send an association relationship between the TCI state and the path loss information. The association relationship may be configured via RRC signaling, or may be sent via MAC CE signaling or DCI signaling. The signaling may be carried on a PDSCH or a PDCCH. The signaling may carry indexes of one or more TCI states and one or more pieces of path loss information. At least one of the one or more TCI states is associated with the first path loss reference signal. Optionally, the indexes of the TCI states in the signaling are in one-to-one correspondence with the path loss information.

In another possible implementation, the terminal device may determine the path loss information corresponding to the first path loss reference signal, which may also be understood as follows: The path loss information is determined by the terminal device and does not need to be sent by the network device.

Optionally, the method further includes 650, in which the terminal device determines the first path loss based on the first information and the path loss information corresponding to the first path loss reference signal.

For example, the terminal device receives, from the network device, the path loss information corresponding to the first path loss reference signal. For example, the path loss information corresponding to the first path loss reference signal may be determined by the terminal device, and does not need to be sent by the network device.

In this application, the path loss information may include different information used by the terminal device to determine PL#1. The following separately describes implementations.

### Implementation 1

The terminal device may first determine, based on the existing formula for calculating a path loss and the received first path loss reference signal, a value corresponding to the second path loss (namely, PL#2). It is assumed that the path loss information includes a path loss adjustment amount ΔPL, where the path loss adjustment amount may indicate a difference between a path loss value PL#1 for a network device #1 and a path loss value PL#2 for a network device #2 that are estimated by the terminal based on a first downlink reference signal (ΔPL = PL#1 - PL#2 or ΔPL = PL#2 - PL#1). For example, the network device #2 sends the first downlink reference signal to the terminal device, and configures a transmit power Pt#1 of the first downlink reference signal. The terminal device receives the first downlink reference signal, may measure a received power Pr1 of the first downlink reference signal, and may estimate the path loss value PL#2 for the network device #2, where PL#2 = Pt#1 - Pr#1. Then, the terminal device may obtain, based on the difference ΔPL between path losses, the path loss value PL#1 for the network device #1, where PL#1 = PL#2 + ΔPL or PL#1 = PL#2 -ΔPL. Subsequently, when using the first downlink reference signal as the path loss reference signal for sending data to the network device, the terminal device adjusts a transmit power to the network device by using the path loss value PL#1.

### Implementation 2

The path loss information includes a value PL#1 corresponding to the first path loss. In this case, when the terminal device performs uplink transmission to the network device, and the uplink transmission corresponds to the first path loss reference signal, the terminal device adjusts a transmit power to the network device by using the path loss value PL#1.

### Implementation 3

The path loss information includes power difference information, where the power difference information may include one of the following manners A and B:
Manner A: The power difference information indicates a difference between a power Pr#1 and a power Pr#2; and
Manner B: The power difference information indicates a difference between a power Pr#2 and a power Pr#1.

### Manner A

It is assumed that a transmit power at which the terminal device sends a first uplink reference signal may be denoted as Pt#1 (for example, for a value of Pt#1, refer to Formula (2) for calculating *P*_{SRS,*b*,*f*,*c*}(*i*, *qₛ, l*)). In addition, after the first uplink reference signal is transmitted through a path between the terminal device and a first network device, the first network device can receive the first uplink reference signal. If a received power at which the first network device receives the first uplink reference signal is Pr#1, Formula (4) may be obtained: $Pr # 1 = Pt # 1 - PL # 1$ (4)

Similarly, it is assumed that a transmit power at which the terminal device sends a second uplink reference signal may be denoted as Pt#2 (for example, for a value of Pt#1, refer to a determining process of *P*_{SRS,*b*,*f*,*c*}(*i*, *qₛ, l*) in Formula (1)). In addition, after the second uplink reference signal is transmitted through a path between the terminal device and a second network device, the second network device can receive the second uplink reference signal. If a received power at which the second network device receives the second uplink reference signal is Pr#2, Formula (5) may be obtained: $Pr # 2 = Pt # 2 - PL # 2$ (5)

It is assumed that after the first network device sends a first path loss reference signal, and the first path loss reference signal is transmitted through the path between the first network device and the terminal device, the terminal device can receive the first path loss reference signal. In addition, based on the foregoing formula PL = referenceSignalPower - higher layer filtered RSRP, the terminal device may determine PL#2.

Based on the foregoing implementation process, for parameters included in Formula (4) and Formula (5), different devices may determine some of the parameters.

For example, for the terminal device, because both the first uplink reference signal and the second uplink reference signal are sent by the terminal device, the terminal device can determine values of the parameters PL#2, Pt#1, and Pt#2.

For another example, for the first network device, because the first uplink reference signal is received by the first network device, the first network device can determine a value of the parameter Pr#1.

For another example, for the second network device, because the second uplink reference signal is received by the second network device, the second network device can determine a value of the parameter Pr#2.

Therefore, according to Formula (4) and Formula (5), Formula (6) and Formula (7) may be obtained: $Pr # 1 - Pr # 2 = \left(Pt#1-PL#1\right) - \left(Pt#2-PL#2\right)$ (6) $Pr # 2 - Pr # 1 = \left(Pt#2-PL#2\right) - \left(Pt#1-PL#1\right)$ (7)

Based on Formula (6) and Formula (7), Formula (8) and Formula (9) may be obtained: $PL # 1 = - \left(Pr#1-Pr#2\right) - \left(Pt#2-PL#2\right) + Pt # 1$ (8) $PL # 1 = \left(Pr#2-Pr#1\right) - \left(Pt#2-PL#2\right) + Pt # 1$ (9)

For the terminal device, according to Formula (8), because the terminal device knows values of the parameters PL#2, Pt#1, and Pt#2, the terminal device can determine the second path loss (PL#2) based on the value of (Pr#1 - Pr#2). It can be learned from Manner A that, in Manner A, the power difference information included in the path loss information may indicate the difference (Pr1 - Pr2) between Pr#1 and Pr#2. Therefore, in the case of implementation by Manner A, the terminal device can determine the path loss PL#1 based on the implementation of Formula (8).

Similarly, for the terminal device, according to Formula (9), because the terminal device knows values of the parameters PL#2, Pt#1, and Pt#2, the terminal device can determine the path loss PL#2 based on the value of (Pr#2 - Pr#1). It can be learned from Manner B that, in Manner B, the power difference information included in the path loss information may indicate the difference (Pr2 - Pr1) between Pr#1 and Pr#2. Therefore, in the case of implementation by Manner B, the terminal device can determine PL#2 based on the implementation of Formula (9).

It may be understood that, in Manner A, when the power difference information included in the path loss information is expressed as ΔP = (Pr#1 - Pr#2), the difference ΔP indicated by the power difference information is the difference between Pr#1 and Pr#2. Accordingly, Formula (8) may be transformed into PL#1 = ΔP - (Pt#2 - PL#2) + Pt#1.

Optionally, if the transmit power of the first uplink reference signal and the transmit power of the second uplink reference signal are the same, that is, Pt2 = Pt1, Formula (8) may be transformed into PL#1 = ΔP + PL#2.

It may be understood that, in Manner B, when the power difference information included in the path loss information is expressed as ΔP = (Pr#2 - Pr#1), the power difference information indicates the difference ΔP between Pr#2 and Pr#1. Accordingly, Formula (9) may be transformed into PL#2 = - ΔP - (Pt#2 - PL#2) + Pt#1.

Optionally, if the transmit power of the first uplink reference signal and the transmit power of the second uplink reference signal are the same, that is, Pt#2 = Pt#1, Formula (9) may be transformed into PL#1 = - ΔP + PL#2.

Implementation 3 may also be understood as follows: The terminal device determines PL#1 based on the first information, PL#2, the power difference, the power Pt#1 for sending the first uplink reference signal, and the power Pt#2 for sending the second reference signal.

In a possible implementation, a communication parameter for sending the first path loss reference signal is the same as a communication parameter for receiving the first uplink reference signal, and/or a communication parameter for receiving the first path loss reference signal is the same as a communication parameter for sending the first uplink reference signal. Specifically, in a communication process between the terminal device and the second network device, communication parameters for receiving and sending the downlink reference signal may be the same as or similar to communication parameters for receiving and sending the first uplink reference signal. In this implementation, the first reference signal and the first uplink reference signal can be transmitted as much as possible through same or similar transmission paths, so that a path loss determined by the terminal device based on the received downlink reference signal is the same as or similar to a path loss determined by the second network device based on the received first uplink reference signal. In other words, it is ensured that the path loss "PL = referenceSignalPower - higher layer filtered RSRP" that is of the downlink reference signal and that is estimated by the terminal side is equal to the path loss PL#1 of the first uplink reference signal, where PL#1 = Pt#1 - Pr#1.

It may be understood that, in Manner A and Manner B, the power difference information may be a "power difference", Pt#2 represents the transmit power of the second uplink reference signal, Pt#1 represents the transmit power of the first uplink reference signal, and ΔP represents the difference indicated by the power difference information. The following separately describes the foregoing implementations.

Optionally, the foregoing implementation may be replaced by the terminal device expecting (or determining) that a communication parameter for sending the downlink reference signal is the same as a communication parameter for receiving the first uplink reference signal, and/or the terminal device expecting (or determining) that a communication parameter for receiving the downlink reference signal is the same as a communication parameter for sending the first uplink reference signal.

Optionally, the communication parameter includes at least one of the following: a beam, an analog beam, an uplink spatial filter, a spatial receive parameter, a spatial filter, a spatial relation, a digital beam, digital precoding, a quantity of antenna ports, and a quantity of digital ports.

For example, the second network device receives the first uplink reference signal and sends the downlink reference signal using the same analog beam/spatial filter/spatial relation. This example may be understood as follows: The terminal device expects that the second network device receives the first uplink reference signal and sends the downlink reference signal using the same spatial filter, the terminal device expects that the first uplink reference signal and the downlink reference signal satisfy a QCL type D relationship with the same reference signal, or the terminal device expects that the first uplink reference signal and the downlink reference signal satisfy the QCL type D relationship.

For another example, the second network device receives the first uplink reference signal and sends the downlink reference signal using the same digital beam/digital precoding. This example may be understood as follows: The terminal device expects that the second network device receives the first uplink reference signal and sends the downlink reference signal using the same digital beam/digital precoding.

For another example, the terminal device sends the first uplink reference signal and receives the downlink reference signal using the same analog beam/spatial filter/spatial relation. This example may be understood as follows: The uplink spatial filter used by the terminal device to send the first uplink reference signal is referenced to the downlink reference signal, the uplink spatial filter used by the terminal device to send the first uplink reference signal and the downlink reference signal satisfy a QCL type D relationship, or the uplink spatial filter used by the terminal device to send the first uplink reference signal and the spatial receive parameter used by the terminal device to receive the downlink reference signal are referenced to a same reference signal.

For another example, the terminal device sends the first uplink reference signal and receives the downlink reference signal using the same digital beam/digital precoding.

### Implementation 4

The path loss information includes the power Pr#3 at which the network device receives the third uplink reference signal. For example, the terminal device sends, at Pt#3, the third uplink reference signal to a network device #1, the network device #1 receives, at the power Pr#3, the second uplink reference signal, and the terminal device obtains a path loss value PL#1 for transmission to the network device #1, where PL#1 = Pt#3 - Pr#3. When the uplink transmission from the terminal device to the network device #1 corresponds to the first path loss reference signal, the path loss value PL#1 is used to adjust the transmit power to the network device #1. This implementation may also be understood as follows: The terminal device determines the first path loss based on the first information, the power at which the terminal device sends the third uplink reference signal, and the power at which the network device receives the third uplink reference signal (in this case, the first path loss may be understood as PL#1).

Based on the foregoing technical solution, in this application, the terminal device may determine, based on the first information, the path loss used for the current uplink transmission from the at least two path losses, determine a value of the path loss based on the received first path loss reference signal, and adjust the transmit power for the uplink transmission based on the determined path loss, thereby ensuring uplink transmission performance.

It should be noted that, in this application, "B corresponding to A" may be understood as "there is a correspondence between A and B", "there is an association relationship between A and B", or "there is a mapping relationship between A and B". Alternatively, in this application, the "association relationship" may be expressed as a "mapping relationship" or a "correspondence". It should be understood that the "association relationship" in embodiments of this application may be stored or recorded by using a function relationship, a table, a mapping relationship, or the like. The "association relationship" mentioned in this application may be configured by the network device, or may be predefined in a protocol, or the like. This is not limited.

The "configuration" in this application means that a network device like a base station or a server sends configuration information of some parameters or values of the parameters to a terminal via messages or signaling, so that the terminal determines communication parameters or transmission resources based on the values or information. Similar to the "configuration", the "preconfiguration" may be a manner in which a network device like a base station or a server sends information or values of parameters to a terminal via communication links or carriers, or may be a manner in which corresponding parameters or parameter values are defined in the standards, or related parameters or values are set in a terminal device in advance. This is not limited in this application. Further, these values and parameters may be changed or updated.

In this application, "indicating" may include "being used to directly indicate" and "being used to indirectly indicate". When a piece of indication information is described as indicating A, it may be understood that the indication information carries A, directly indicates A, or indirectly indicates A.

In this application, information indicated by the indication information is referred to as to-be-indicated information. In a specific implementation process, the to-be-indicated information is indicated in a plurality of manners. For example, the to-be-indicated information may be directly indicated, for example, indicated by using the to-be-indicated information or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitter device by sending configuration information to a receiver device. The configuration information may include, for example, but is not limited to, one or a combination of at least two of RRC signaling, MAC layer signaling, and physical layer signaling. The MAC layer signaling includes, for example, a MAC CE, and the physical layer signaling includes, for example, DCI.

"Sending" and "receiving" in embodiments of this application represent signal transmission directions. For example, "sending information to a device X" may be understood as that a destination end of the information is the device X, and may include direct sending through an air interface, or indirect sending by another unit or module through an air interface. "Receiving information from a device Y" may be understood as that a source end of the information is the device Y, and may include direct receiving from the device Y through an air interface, or indirect receiving from the device Y from another unit or module through an air interface. The "sending" may also be understood as "outputting" of a chip interface, and the "receiving" may also be understood as "inputting" of the chip interface.

A communication process between an entity A and an entity B is used as an example. In this application, that an entity A sends information to an entity B may be that A directly sends the information to B, or may be that A indirectly sends the information to B through another entity. Similarly, that the entity B receives information from the entity A may be that the entity B directly receives the information sent by the entity A, or may be that the entity B indirectly receives the information sent by the entity A through another entity. The entity A and the entity B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a distributed unit DU. Information sending and receiving may alternatively be information exchange between different modules in an apparatus, for example, information exchange between a chip in a terminal and another module in the terminal, or information exchange between a chip in a base station and another module in the base station.

It may be understood that the examples in the method 600 in embodiments of this application are merely intended to help a person skilled in the art understand embodiments of this application, but are not intended to limit embodiments of this application to specific scenarios in the examples. It is clear that a person skilled in the art can make various equivalent modifications or variations based on the examples in the method 600, and such modifications or variations also fall within the scope of embodiments of this application.

It may be further understood that, in some scenarios, some optional features in embodiments of this application may be independently implemented without depending on another feature. Alternatively, in some scenarios, the optional features are combined with another feature. This is not limited.

It may be further understood that embodiments described in this application may be independent solutions, or may be combined based on internal logic. All these solutions fall within the protection scope of this application. In addition, interpretations or descriptions of terms in embodiments may be mutually referenced or interpreted in embodiments. This is not limited.

It may be understood that in this application, both "when" and "if" mean that an apparatus performs corresponding processing in an objective situation, and are not intended to limit time. The terms do not require that the apparatus is required to have a determining action during implementation, and do not mean any other limitation.

It may be understood that, the term "and/or" in this specification merely describes an association relationship between associated objects, and indicates that three relationships may exist. For example, A and/or B may indicate the following cases: Only A exists, both A and B exist, and only B exists. In addition, the character "/" in this specification generally indicates an "or" relationship between the associated objects.

The foregoing mainly describes the solutions provided in embodiments of this application from a perspective of interaction between nodes. It may be understood that, to implement the foregoing functions, the nodes such as the terminal device and the network device include corresponding hardware structures and/or software modules for performing the functions. A person skilled in the art should be aware that units and algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this embodiment of this application, functional modules may be divided on the terminal device and the network device based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

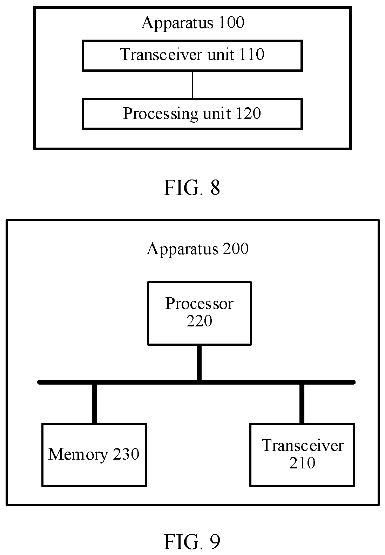

FIG. 8 is a schematic block diagram of a communication apparatus 100 according to an embodiment of this application. As shown in the figure, the apparatus 100 may include a transceiver unit 110 and a processing unit 120.

The communication apparatus 100 may be the terminal side apparatus in the foregoing embodiments, for example, a terminal or a communication module in the terminal, or a circuit or chip that is responsible for a communication function in the terminal. In a possible design, the apparatus 100 may be the terminal device in the foregoing method embodiments, or may be a chip configured to implement functions of the terminal device in the foregoing method embodiments. It should be understood that the apparatus 100 may correspond to the terminal device in the method 600 in embodiments of this application, and the apparatus 100 may perform the steps corresponding to the terminal device in the method 600 in embodiments of this application.

In a possible implementation, the transceiver unit is configured to receive first information, where the first information indicates that a first path loss reference signal is used to determine a first path loss among at least two path losses; the transceiver unit is further configured to receive a first reference signal; and the processing unit is configured to determine the first path loss based on the first information and the first path loss reference signal, where the first path loss is used for uplink transmission.

In a possible implementation, the transceiver unit is further configured to receive first indication information, where the first indication information indicates at least two transmission configuration indicator TCI states.

In a possible implementation, the transceiver unit is further configured to receive first medium access control control element MAC CE signaling, where the first MAC CE is used to activate at least one TCI state, and the at least one activated TCI state includes the TCI state for the uplink transmission of the terminal device.

In a possible implementation, the processing unit is further configured to obtain path loss information corresponding to the first path loss reference signal, where the path loss information is used to determine the first path loss. Determining the first path loss based on the first information and the first path loss reference signal includes: determining the first path loss based on the first information, the first path loss reference signal, and the path loss information.

In a possible design, when the communication apparatus 100 is a terminal or a communication module in the terminal, a function of the processing unit 120 may be implemented by one or more processors. Specifically, the processor may include a modem chip, or a system on chip SoC chip or an SIP chip including a modem core.

In a possible design, when the communication apparatus 100 is a circuit or chip that is responsible for a communication function in the terminal, for example, a modem chip, or a system on chip SoC chip or an SIP chip including a modem core, or an SIP chip, a function of the processing unit 120 may be implemented by a circuit system that is in the chip and that includes one or more processors or processor cores.

In a possible design, the apparatus 100 may be the network device in the foregoing method embodiments, or may be a chip configured to implement functions of a terminal device in the foregoing method embodiments. It should be understood that the apparatus 100 may correspond to the network device in the method 600 in embodiments of this application, and the apparatus 100 may perform the steps corresponding to the network device in the method 600 in embodiments of this application.

In a possible implementation, the transceiver unit is configured to send first information, and the transceiver unit is further configured to send a first path loss reference signal.

In a possible implementation, the transceiver unit is configured to send first indication information.

In a possible implementation, the transceiver unit is configured to send first MAC CE signaling.

In a possible implementation, the transceiver unit is configured to send path loss information corresponding to a first path loss reference signal.

It should be further understood that the apparatus 100 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the apparatus 100 may be specifically the terminal device or the network device in the foregoing embodiments, and may be configured to perform the procedures and/or steps corresponding to the terminal device in the foregoing method embodiments. To avoid repetition, details are not described herein again.

The apparatus 100 in each of the foregoing solutions has functions of implementing corresponding steps performed by the terminal device or the network device in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform receiving-sending operations and a related processing operation in the method embodiments.

In addition, alternatively, the transceiver unit 110 may be a transceiver circuit (for example, may include a receiving circuit and a sending circuit), and the processing unit may be a processing circuit.

It should be noted that the apparatus in FIG. 8 may be the terminal device or the network device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 9 is a schematic block diagram of a communication apparatus 200 according to an embodiment of this application. As shown in the figure, the apparatus 200 includes at least one processor 220. The processor 220 is coupled to a memory, and is configured to execute a computer program or instructions stored in the memory, to send a signal and/or receive a signal. Optionally, the apparatus 200 further includes a memory 230, configured to store the computer program or the instructions. Optionally, the apparatus 200 further includes a transceiver 210, and the processor 220 controls the transceiver 210 to transmit a signal and/or receive a signal.

It should be understood that the processor 220 and the memory 230 may be integrated into one processing device. The processor 220 is configured to execute program code stored in the memory 230 to implement the foregoing functions. During specific implementation, the memory 230 may alternatively be integrated into the processor 220, or may be independent of the processor 220.

It should be further understood that the transceiver 210 may include a transceiver (or referred to as a receiver machine) and a transmitter (or referred to as a transmitter machine). The transceiver may further include an antenna. There may be one or more antennas. The transceiver 210 may be a communication interface or an interface circuit.

Specifically, the transceiver 210 in the apparatus 200 may correspond to the transceiver unit 110 in the apparatus 100, and the processor 220 in the apparatus 200 may correspond to the processing unit 120 in the apparatus 200.

In a solution, the apparatus 200 is configured to implement operations performed by the terminal device in the foregoing method embodiments.

For example, the processor 220 is configured to execute a computer program or instructions stored in the memory 230, to implement related operations performed by the radio access network device in the foregoing method embodiments, for example, the method performed by the terminal device in any one of the embodiments in the method 600.

In another solution, the apparatus 200 is configured to implement operations performed by the network device in the foregoing method embodiments.

For example, the processor 220 is configured to execute a computer program or instructions stored in the memory 230, to implement related operations performed by the network device in the foregoing method embodiments, for example, the method performed by the network device in any one of the embodiments in the method 600.

It should be understood that specific processes in which the transceiver and the processor perform the foregoing corresponding steps are described in detail in the foregoing method embodiments. For brevity, details are not described herein again.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

Based on the methods provided in embodiments of this application, this application further provides a computer program product. The computer program product stores computer program code. When the computer program code is run on a computer, the computer is caused to perform the method performed by the terminal device or the network device in any one of the embodiments of the method 600.

Based on the methods provided in embodiments of this application, this application further provides a computer-readable medium. The computer-readable medium stores program code. When the program code is run on a computer, the computer is caused to perform the method performed by the terminal device or the network device in the foregoing embodiments.

Based on the methods provided in embodiments of this application, this application further provides a communication system. The communication system includes a terminal device and a network device. The terminal device is configured to perform the steps corresponding to the terminal device in the method 600, and the network device is configured to perform the steps corresponding to the network device in the method 600.

For explanations and beneficial effects of related content in any one of the apparatuses provided above, refer to the corresponding method embodiment provided above. Details are not described herein again.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or another programmable device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state disc, SSD)), or the like.

In the foregoing apparatus embodiments, corresponding modules or units perform corresponding steps. For example, the transceiver unit (transceiver) performs a receiving or sending step in the method embodiments, and the processing unit (processor) may perform steps other than the sending and receiving steps. For a function of a specific unit, refer to a corresponding method embodiment. There may be one or more processors.

Terminologies such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a compute device and an application that runs on the compute device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, device, and unit, refer to a corresponding process in the foregoing method embodiments, and details are not described herein again.

In the several embodiments provided in this application, it should be understood that the disclosed system, device, and method may be implemented in other manners. For example, the described device embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be further understood that ordinal numbers such as "first" and "second" mentioned in embodiments of this application are intended to distinguish between a plurality of objects, but are not intended to limit sizes, content, a sequence, a time sequence, priorities, importance degrees, or the like of the plurality of objects. For example, a first PDSCH and a second PDSCH may be a same physical channel, or may be different physical channels. In addition, these names do not indicate that the two physical channels have different information amounts, content, priorities, importance degrees, or the like.

It should be further understood that, in this application, "at least one" means one or more, and "a plurality of" means two or more. "At least one item (piece) of the following" or a similar expression thereof means any combination of these items, including any combination of singular items (pieces) or plural items (pieces). For example, at least one of a, b, or c may represent a, b, c, a and b, a and c, b and c, or a, b, and c.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for determining a path loss, comprising:
receiving first downlink control information, wherein the first downlink control information is used to schedule physical random access channel transmission, the first downlink control information indicates that a first path loss reference signal is used to determine one path loss of at least two path losses, and the path loss is used for the physical random access channel transmission;
receiving the first path loss reference signal; and
determining one of the at least two path losses based on the first downlink control information and the first path loss reference signal.

2. The method according to claim 1, wherein the at least two path losses comprise a first path loss and a second path loss, and the first downlink control information comprises a first field;
the first field indicates whether a path loss for the physical random access channel transmission is the first path loss or the second path loss; or
the first field indicates whether a path loss for the physical random access channel transmission needs addition of a path loss adjustment amount to the second path loss, wherein the path loss adjustment amount indicates a difference between the first path loss and the second path loss.

3. The method according to claim 1 or 2, wherein the at least two path losses comprise the first path loss and the second path loss, the first downlink control information comprises the first field, a value of "1" of the first field indicates that the path loss for the physical random access channel transmission is the first path loss, or indicates that the path loss for the physical random access channel transmission needs addition of the path loss adjustment amount to the second path loss, and the path loss adjustment amount indicates the difference between the first path loss and the second path loss.

4. The method according to any one of claims 1 to 3, wherein the at least two path losses comprise the first path loss and the second path loss, the first downlink control information comprises the first field, a value of "0" of the first field indicates that the path loss for the physical random access channel transmission is the second path loss, or indicates that the path loss for the physical random access channel transmission does not need the addition of the path loss adjustment amount to the second path loss, and the path loss adjustment amount indicates the difference between the first path loss and the second path loss.

5. The method according to any one of claims 1 to 4, wherein when the first field indicates that the path loss for the physical random access channel transmission is the first path loss, or indicates that the path loss for the physical random access channel transmission needs addition of the path loss adjustment amount to the second path loss, the determining one of the at least two path losses based on the first downlink control information and the first path loss reference signal comprises:
determining the second path loss based on the first path loss reference signal, wherein the second path loss is determined based on a transmit power and a received power of the first path loss reference signal, the transmit power is a power configured by a network device for sending the first path loss reference signal, and the received power is a received power at which a terminal device receives the first path loss reference signal;
receiving the path loss adjustment amount, wherein the path loss adjustment amount indicates the difference between the first path loss and the second path loss; and
determining the first path loss based on the second path loss and the path loss adjustment amount.

6. The method according to any one of claims 1 to 5, wherein the method further comprises:
receiving first configuration information, wherein the first configuration information is used to configure an association relationship between a first transmission configuration indicator TCI state and the path loss adjustment amount, the first TCI state is associated with the first path loss reference signal, and the path loss adjustment amount indicates the difference between the first path loss and the second path loss; and
based on the first configuration information, determining that the path loss for the physical random access channel transmission is the first path loss, or determining that the path loss for the physical random access channel transmission needs addition of the path loss adjustment amount to the second path loss.

7. The method according to any one of claims 1 to 6, wherein the first field is 1 bit.

8. A method for determining a path loss, comprising:
sending first downlink control information, wherein the first downlink control information is used to schedule physical random access channel transmission, the first downlink control information indicates that a first path loss reference signal is used to determine one path loss of at least two path losses, and the path loss is used for the physical random access channel transmission; and
sending the first path loss reference signal.

9. The method according to claim 8, wherein the at least two path losses comprise a first path loss and a second path loss, and the first downlink control information comprises a first field;
the first field indicates whether a path loss for the physical random access channel transmission is the first path loss or the second path loss; or
the first field indicates whether a path loss for the physical random access channel transmission needs addition of a path loss adjustment amount to the second path loss, wherein the path loss adjustment amount indicates a difference between the first path loss and the second path loss.

10. The method according to claim 8 or 9, wherein the at least two path losses comprise the first path loss and the second path loss, the first downlink control information comprises the first field, a value of "1" of the first field indicates that the path loss for the physical random access channel transmission is the first path loss, or indicates that the path loss for the physical random access channel transmission needs addition of the path loss adjustment amount to the second path loss, and the path loss adjustment amount indicates the difference between the first path loss and the second path loss.

11. The method according to any one of claims 8 to 10, wherein the at least two path losses comprise the first path loss and the second path loss, the first downlink control information comprises the first field, a value of "0" of the first field indicates that the path loss for the physical random access channel transmission is the second path loss, or indicates that the path loss for the physical random access channel transmission does not need the addition of the path loss adjustment amount to the second path loss, and the path loss adjustment amount indicates the difference between the first path loss and the second path loss.

12. The method according to any one of claims 8 to 11, wherein the method further comprises:
sending the path loss adjustment amount, wherein the path loss adjustment amount indicates the difference between the first path loss and the second path loss; and
when the first field indicates that the path loss for the physical random access channel transmission is the first path loss, or indicates that the path loss for the physical random access channel transmission needs addition of the path loss adjustment amount to the second path loss, the first path loss is determined based on the second path loss and the path loss adjustment amount, and the second path loss is determined based on a transmit power and a received power of the first path loss reference signal, wherein the transmit power is a power configured by a network device for sending the first path loss reference signal, and the received power is a received power at which a terminal device receives the first path loss reference signal.

13. The method according to any one of claims 8 to 12, wherein the method further comprises:
sending first configuration information, wherein the first configuration information is used to configure an association relationship between a first transmission configuration indicator TCI state and the path loss adjustment amount, the first TCI state is associated with the first path loss reference signal, and the path loss adjustment amount indicates the difference between the first path loss and the second path loss.

14. The method according to any one of claims 8 to 13, wherein the first field is 1 bit.

15. A method for determining a path loss, comprising:
receiving first information, wherein the first information indicates that a first path loss reference signal is used to determine a first path loss among at least two path losses;
receiving the first path loss reference signal; and
determining the first path loss based on the first information and the first path loss reference signal, wherein the first path loss is used for uplink transmission.

16. The method according to claim 15, wherein the first information comprises an association relationship between a transmission configuration indicator TCI state corresponding to the uplink transmission and a first path loss compensation factor of at least two path loss compensation factors, the TCI state corresponds to the first path loss reference signal, the at least two path loss compensation factors are in one-to-one correspondence with the at least two path losses, and the first path loss compensation factor corresponds to the first path loss.

17. The method according to claim 15, wherein the first information is at least one of the following:
configuration information of a transmission configuration indicator TCI state for the uplink transmission, configuration information of the path loss reference signal, configuration information of a path loss compensation factor set for the uplink transmission, and configuration information of an uplink power control parameter for the uplink transmission.

18. The method according to claim 15, wherein the first information comprises first downlink control information, the first downlink control information comprises a first field, a value of the first field indicates that the first path loss reference signal is used to determine the first path loss among the at least two path losses, and the first downlink control information is used to schedule the uplink transmission.

19. The method according to claim 18, wherein the first field is a sounding reference signal SRS resource set indicator field.

20. The method according to claim 15, wherein the first information comprises an association relationship between second downlink control information and a first control resource set pool index, the first control resource set pool index is used to determine the first path loss among the at least two path losses, and the first downlink control information is used to schedule the uplink transmission.

21. The method according to claim 15, wherein the method further comprises:
receiving first indication information, wherein the first indication information indicates at least two transmission configuration indicator TCI states; and
the first information comprises second indication information, the second indication information indicates, from the at least two TCI states, one TCI state or two TCI states for the uplink transmission, and the one TCI state or two TCI states for the uplink transmission indicate that the first path loss reference signal is used to determine the first path loss among the at least two path losses.

22. The method according to claim 21, wherein
the second indication information indicates that, from the at least two TCI states, the TCI state for the uplink transmission is a first TCI state, and the first TCI state corresponds to the first path loss; or
the second indication information indicates that, from the at least two TCI states, the TCI state for the uplink transmission is a second TCI state, and the second TCI state corresponds to the first path loss.

23. The method according to claim 21 or 22, wherein the method further comprises:
receiving first medium access control control element MAC CE signaling, wherein the first MAC CE is used to activate at least one TCI state, and the at least one activated TCI state comprises the TCI state for the uplink transmission of the terminal device.

24. The method according to claim 23, wherein
the second indication information indicates that, from the at least two TCI states, the TCI state for the uplink transmission is a TCI state corresponding to F_{i,2} in the first MAC CE signaling, and the TCI state corresponding to F_{i,2} in the first MAC CE signaling corresponds to the first path loss; or
the second indication information indicates that, from the at least two TCI states, the TCI state for the uplink transmission is a TCI state corresponding to F_{i,1} in the first MAC CE signaling, and the TCI state corresponding to F_{i,1} in the first MAC CE signaling corresponds to the first path loss.

25. The method according to claim 23, wherein
the second indication information indicates that, from the at least two TCI states, the TCI state for the uplink transmission is a TCI state corresponding to S_{i,2} in the first MAC CE signaling, and the TCI state corresponding to S_{i,2} in the first MAC CE signaling corresponds to the first path loss; or
the second indication information indicates that, from the at least two TCI states, the TCI state for the uplink transmission is a TCI state corresponding to S_{i,1} in the first MAC CE signaling, and the TCI state corresponding to S_{i,1} in the first MAC CE signaling corresponds to the first path loss.

26. The method according to any one of claims 15 to 25, wherein the method further comprises:
obtaining path loss information corresponding to the first path loss reference signal, wherein the path loss information is used to determine the first path loss; and
the determining the first path loss based on the first information and the first path loss reference signal comprises:
determining the first path loss based on the first information, the first path loss reference signal, and the path loss information.

27. The method according to any one of claims 15 to 26, wherein the at least two path losses further comprise a second path loss, the second path loss is determined by the terminal device based on a transmit power and a received power of the first path loss reference signal, the transmit power is a power configured by a network device for sending the first path loss reference signal, and the received power is a received power at which the terminal device receives the first path loss reference signal.

28. The method according to claim 27, wherein the path loss information comprises a path loss adjustment amount, and the path loss adjustment amount indicates a difference between the first path loss and the second path loss; and
the determining the first path loss based on the first information, the first path loss reference signal, and the path loss information comprises:
determining the second path loss based on the first path loss reference signal; and
determining the first path loss based on the first information, the second path loss, and the path loss adjustment amount.

29. The method according to claim 26, wherein the path loss information comprises the first path loss.

30. A method for determining a path loss, comprising:
sending first information, wherein the first information indicates that a first path loss reference signal is used to determine a first path loss among at least two path losses, and the first path loss is used for uplink transmission; and
sending the first path loss reference signal.

31. The method according to claim 30, wherein the first information comprises an association relationship between a transmission configuration indicator TCI state corresponding to the uplink transmission and a first path loss compensation factor of at least two path loss compensation factors, the TCI state corresponds to the first path loss reference signal, the at least two path loss compensation factors are in one-to-one correspondence with the at least two path losses, and the first path loss compensation factor corresponds to the first path loss.

32. The method according to claim 30, wherein the first information is at least one of the following:
configuration information of a transmission configuration indicator TCI state for the uplink transmission, configuration information of the path loss reference signal, configuration information of a path loss compensation factor set for the uplink transmission, and configuration information of an uplink power control parameter for the uplink transmission.

33. The method according to claim 30, wherein the first information comprises first downlink control information, the first downlink control information comprises a first field, a value of the first field indicates that the first path loss reference signal is used to determine the first path loss among the at least two path losses, and the first downlink control information is used to schedule the uplink transmission.

34. The method according to claim 33, wherein the first field is a sounding reference signal SRS resource set indicator field.

35. The method according to claim 30, wherein the first information comprises an association relationship between second downlink control information and a first control resource set pool index, the first control resource set pool index is used to determine the first path loss among the at least two path losses, and the first downlink control information is used to schedule the uplink transmission.

36. The method according to claim 30, wherein the method further comprises:
sending first indication information, wherein the first indication information indicates at least two transmission configuration indicator TCI states; and
the first information comprises second indication information, the second indication information indicates, from the at least two TCI states, one TCI state or two TCI states for the uplink transmission, and the one TCI state or two TCI states for the uplink transmission indicate that the first path loss reference signal is used to determine the first path loss among the at least two path losses.

37. The method according to claim 36, wherein
the second indication information indicates that, from the at least two TCI states, the TCI state for the uplink transmission is a first TCI state, and the first TCI state corresponds to the first path loss reference signal; or
the second indication information indicates that, from the at least two TCI states, the TCI state for the uplink transmission is a second TCI state, and the second TCI state corresponds to the first path loss reference signal.

38. The method according to claim 36 or 37, wherein the method further comprises:
sending first medium access control control element MAC CE signaling, wherein the first MAC CE is used to activate at least one TCI state, and the at least one activated TCI state comprises the TCI state for the uplink transmission of the terminal device.

39. The method according to claim 38, wherein
the second indication information indicates that, from the at least two TCI states, the TCI state for the uplink transmission is a TCI state corresponding to F_{i,2} in the first MAC CE signaling, and the TCI state corresponding to F_{i,2} in the first MAC CE signaling corresponds to the first path loss; or
the second indication information indicates that, from the at least two TCI states, the TCI state for the uplink transmission is a TCI state corresponding to F_{i,1} in the first MAC CE signaling, and the TCI state corresponding to F_{i,1} in the first MAC CE signaling corresponds to the first path loss.

40. The method according to claim 38, wherein
the second indication information indicates that, from the at least two TCI states, the TCI state for the uplink transmission is a TCI state corresponding to S_{i,2} in the first MAC CE signaling, and the TCI state corresponding to S_{i,2} in the first MAC CE signaling corresponds to the first path loss; or
the second indication information indicates that, from the at least two TCI states, the TCI state for the uplink transmission is a TCI state corresponding to S_{i,1} in the first MAC CE signaling, and the TCI state corresponding to S_{i,1} in the first MAC CE signaling corresponds to the first path loss.

41. The method according to any one of claims 30 to 40, wherein the method further comprises:
sending path loss information corresponding to the first path loss reference signal, wherein the path loss information is used to determine the first path loss.

42. The method according to any one of claims 30 to 41, wherein the at least two path losses further comprise a second path loss, the second path loss is determined by the terminal device based on a transmit power and a received power of the first path loss reference signal, the transmit power is a power configured by a network device for sending the first path loss reference signal, and the received power is a received power at which the terminal device receives the first path loss reference signal.

43. The method according to claim 42, wherein the path loss information comprises a path loss adjustment amount, and the path loss adjustment amount indicates a difference between the first path loss and the second path loss.

44. The method according to claim 41, wherein the path loss information comprises the first path loss.

45. A communication apparatus, configured to implement the method according to any one of claims 1 to 7, or configured to implement the method according to any one of claims 15 to 29.

46. The communication apparatus according to claim 45, wherein the communication apparatus comprises any one of the following: a terminal device or a chip.

47. A communication apparatus, configured to implement the method according to any one of claims 8 to 14, or configured to implement the method according to any one of claims 30 to 44.

48. The communication apparatus according to claim 47, wherein the communication apparatus comprises any one of the following: a network device or a chip, or a central unit CU or a distributed unit DU.

49. A computer-readable storage medium, wherein the computer-readable storage medium stores a computer program or instructions, and when the computer program or the instructions are run, the method according to any one of claims 1 to 7, the method according to any one of claims 8 to 14, the method according to any one of claims 15 to 29, or the method according to any one of claims 30 to 44 is performed.

50. A computer program product, wherein when the computer program product runs, the method according to any one of claims 1 to 7, the method according to any one of claims 8 to 14, the method according to any one of claims 15 to 29, or the method according to any one of claims 30 to 44 is performed.
